(19) Europäisches Patentamt
European Patent Office
Office européen des brevets

(11) Numéro de publication: 0 015 824
B1

(12) FASCICULE DE BREVET EUROPEEN

(45) Date de publication du fascicule de brevet 17.02.82

(51) Int Cl³: C 07 F 9/165, C 10 M 1/48

(21) Numéro de dépôt 80400268.1

(22) Date de dépôt 27.02.80

# (54) Dithiophosphates métalliques, procédé pour leur préparation et leur application comme additifs pour huiles lubrifiantes.

(30) Priorité 09.03.79 FR 7906058

(43) Date de publication de la demande: 17.09.80 Bulletin 80/19

(45) Mention de la délivrance du brevet: 17.02.82 Bulletin 82/7

(84) Etats contractants désignés: AT BE CH DE GB IT NL SE

(56) Documents cités:
US-A-2 905 683
US-A-3 944 495

**Le dossier contient des informations techniques présentées postérieurement au dépôt de la demande et ne figurant pas dans le présent fascicule.**

(73) Titulaire: OROGIL, 25, quai Paul Doumer, F-92408 Courbevoie (FR)

(72) Inventeur: Rivier, Georges, 22bis, rue des Essarts, F-69500 Bron (FR)

(74) Mandataire: Fabre, Madeleine-France et al, RHONE POULENC Service Brevets Chimie et Polymères B.P.753, F-75360 Paris Cedex 08 (FR)

EP 0 015 824 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen)

Dithiophosphates métalliques, procédé pour leur préparation et leur application comme additifs pour huiles lubrifiantes

La présente invention a pour objet de nouveaux dithiophosphates métalliques et leur application comme additifs extrême-pression et anti-usure pour huiles lubrifiantes.

Il est connu d'après le brevet américain n° 3 944 495 d'améliorer les fluides de transmission de boites automatiques par addition de dithiophosphates métalliques de formule:

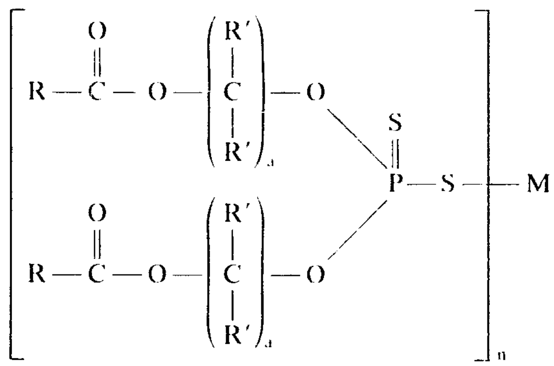

où:

- R représente un radical saturé aliphatique en $C_4 - C_{30}$
- R' représente de l'hydrogène, un radical alcoyl en $C_1 - C_6$ ou aryl en $C_6 - C_9$,
- a est un nombre entier compris entre 2 et 12
- n correspond à la valence du métal M
- M représente un métal alcalin, alcalino-terreux ou un métal de transition.

De tels produits sont particulièrement bien adaptés au problème des fluides de transmission de boite automatique qui ne nécessite pas des additifs de grande stabilité thermique.

Par contre de tels produits ne sont pas suffisamment stables thermiquement pour être utilisés comme additifs pour huiles moteur et notamment pour huiles moteur diesel.

Il est également connu pour améliorer les propriétés des huiles lubrifiantes (brevet français n° 1 310 171) d'utiliser des dialkyldithiophosphates métalliques préparés à partir de mono-alcools du type »néo«, c'est-à-dire d'alcools dans lesquels l'atome de carbone voisin de l'atome de carbone fixé au groupe hydroxyle est substitué entièrement par des groupes alcoyles.

De tels produits présentent l'inconvénient de n'être que d'une efficacité moyenne et en outre de ne pouvoir être utilisés industriellement en raison du coût élevé des mono-alcools »néo«.

La demanderesse a trouvé de nouveaux dithiophosphates métalliques stables thermiquement et pouvant être utilisés industriellement pour améliorer notamment les propriétés extrême-pression et antiusure des huiles lubrifiantes.

Ces nouveaux dithiophosphates métalliques objet de l'invention, sont caractérisés en ce qu'ils répondent à la formule:

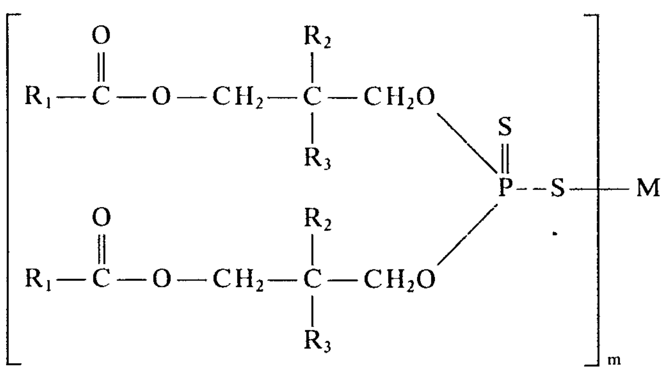

formule dans laquelle:

- $R_1$ représente:
  - un radical alcoyle linéaire ou ramifié contenant de 1 à 24 atomes de carbone, et de préférence de 1 à 17 atomes de carbone, éventuellement substitué par au moins un groupe phényle, halogéno ou hétérocyclique contenant un ou plusieurs hétéroéléments choisis parmi l'azote, le soufre ou l'oxygène,

- un radical alcényle linéaire ou ramifié contenant de 2 à 24 atomes de carbone, et de préférence de 2 à 17 atomes de carbone, éventuellement substitué par au moins un groupe phényle, halogéno ou hétérocyclique contenant un ou plusieurs hétéroéléments choisis parmi l'azote, le soufre ou l'oxygène,
- un radical cycloaliphatique ou polycycloaliphatique saturé ou insaturé contenant de 3 à 20 atomes de carbone, éventuellement substitué par un ou plusieurs groupes alcoyles contenant de 1 à 12 atomes de carbone ou halogéno,
- un radical aryle contenant de 6 à 14 atomes de carbone et de préférence 6 atomes de carbone, éventuellement substitué par un ou plusieurs groupes alcoyles contenant de 1 à 12 atomes de carbone, halogéno ou halogénoalcoyle,
- un radical hétérocyclique contenant 1 ou plusieurs hétéroéléments choisis parmi l'azote, le soufre ou l'oxygène, éventuellement substitué par un ou plusieurs groupes alcoyles contenant de 1 à 12 atomes de carbone ou halogéno.

- $R_2$ et $R_3$ sont semblables ou différents et représentent un radical alcoyle contenant de 1 à 12 atomes de carbone, et de préférence de 1 à 4 atomes de carbone;
- m représente la valence du métal M
- M représente un métal du groupe IIB, IIIB, IVB ou VIII de la classification périodique des éléments, et tout particulièrement le zinc.

A titre d'exemple de radicaux $R_1$ on peut citer les radicaux:

- méthyle
- dichloro-1,2 éthyle
- heptyle
- bromo-10 décyle
- dibromo-8,9 heptadécyle
- heptadécyle
- vinyle
- phénylvinylène
- furyl-2 vinylène
- isopropényle
- décényle
- heptadécényle
- cyclopropyle
- cyclohexyle
- cyclohexényle
- en $C_{19}H_{29}$ dérivé de l'acide abiétique
- phényle
- p-chlorophényle
- p-trifluorométhylphényle
- diméthyl-2,3 phényle-1
- p-octylphényle
- furyle-2
- méthyl-4 thiazolyle-5
- pyridyle-3

A titre d'exemple de radicaux $R_2$ ou $R_3$, on peut citer les radicaux: méthyle, éthyle, n-butyle.

Les nouveaux produits faisant l'objet de l'invention, peuvent être préparés par action d'un composé basique du métal M, et tout particulièrement par action de l'oxyde de zinc, sur un acide dithiophosphorique de formule (I).

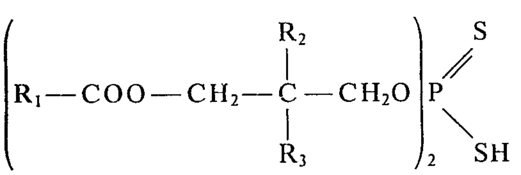

(I)

où $R_1$, $R_2$ et $R_3$ ont la signification donnée ci-dessus, avec une quantité de composé basique de métal M comprise entre la quantité stoechiométriquement nécessaire pour neutraliser ledit acide dithiophosphorique et deux fois cette quantité stoechiométrique.

Cette opération peut être réalisée à une température comprise entre 20 et 200°C, de préférence entre 60 et 150°C avec une quantité de composé basique de métal M de préférence comprise entre 1,1 fois et 1,5 fois la quantité stoechiométrique.

L'acide dithiophosphorique de formule I peut être préparé par action du pentasulfure de phosphore sur un monoesteralcool de formule II.

$$\begin{array}{c} \qquad\qquad\qquad\qquad\quad R_2 \\ \qquad\qquad\qquad\qquad\quad | \\ R_1-COO-CH_2-C-CH_2OH \\ \qquad\qquad\qquad\qquad\quad | \\ \qquad\qquad\qquad\qquad\quad R_3 \end{array} \qquad (II)$$

où $R_1$, $R_2$ et $R_3$ ont la signification donnée ci-dessus avec une quantité de $P_2S_5$ en excès de 5 à 20% en mole par rapport à la quantité de $P_2S_5$ stoechiométriquement nécessaire.

Cette opération peut être réalisée à une température comprise entre 50 et 200°C, de préférence entre 70 et 150°C avec une quantité de $P_2S_5$ correspondant de préférence à un excès de 5% en mole par rapport à la stoechiométrie.

Le monoesteralcool de formule II peut être préparé par action d'un acide de formule $R_1COOH$ où $R_1$ a la signification donnée ci-dessus avec un diol de formule III

$$\begin{array}{c} \qquad\qquad R_2 \\ \qquad\qquad | \\ HO-CH_2-C-CH_2OH \\ \qquad\qquad | \\ \qquad\qquad R_3 \end{array} \qquad (III)$$

où $R_2$ et $R_3$ ont la signification donnée ci-dessus avec un rapport molaire acide/diol compris entre 1/1 et 1/15 et de préférence entre 1/2 et 1/12.

Cette opération peut être réalisée à une température comprise entre 50 et 300 et de préférence entre 80 et 200°C, en présence d'un catalyseur acide.

Parmi les acides de formule $R_1COOH$ pouvant être mis en oeuvre, on peut citer:

- l'acide acétique
- l'acide dichloro-2,3 propanoique
- l'acide octanoique
- l'acide bromo-11 undécanoique
- l'acide dibromo-9,10 octadécanoique
- l'acide stéarique
- l'acide acrylique
- l'acide cinnamique
- l'acide furanacrylique-2
- l'acide méthacrylique
- l'acide undecylénique
- l'acide oleique
- l'acide cyclopropane carboxylique
- l'acide cyclohexane carboxylique
- l'acide cyclohexène-1 carboxylique
- l'acide abiétique
- l'acide benzoique
- l'acide p-chlorobenzoique
- l'acide p-trifluorométhylbenzoique
- l'acide diméthyl-2,3 benzoique
- l'acide p-n-octyl benzoique
- l'acide furan-2 carboxylique
- l'acide méthyl-4 thiazol carboxylique-5
- l'acide nicotinique

Parmi les diols de formule III pouvant être mis en oeuvre on peut citer: le néopentylglycol, l'éthyl-2 butyl-n-2 propanediol-1,3.

La présente invention a également pour objet l'application des dithiophosphates métalliques ci-dessus décrits comme additifs extrême-pression et anti-usure pour huiles lubrifiantes.

Parmi les huiles lubrifiantes pouvant être améliorées par addition desdits dithiophosphates on peut citer les huiles naturelles de visoosité comprise entre 20,6 cst et 541 cst à 37,8°C (soit entre 100 et 2500 SUS à 100°F) ou les bases synthétiques ou semi-synthétiques (hydrocarbures synthétiques, esters, polyesters, polyéthers) de viscosités comparables.

Les quantités desdits dithiophosphates que l'on peut introduire dans les huiles lubrifiantes sont comprises entre 0,2 et 10%, en poids. Ces quantités de dithiophosphates sont fonction de l'utilisation future de l'huile, à savoir comme huile pour moteur, boite à vitesse ou transmission automatique, fluide hydraulique ou huile de coupe pour l'industrie mécanique.

Des adjuvants antioxydants, anti-corrosion, anti-mousse, détergents-dispersants, d'autres adjuvants extrême-pression et anti-mousse ... peuvent être introduits sans qu'il ne résulte de

problème lié à la compatibilité ou une perte de niveau des performances.

Les exemples suivants sont donnés à titre indicatif et ne peuvent être considérés comme une limite du domaine et de l'exprit de l'invention.

## Exemple 1

Préparation du bis O,O (monooléate de diméthyl-2,2 propanediyle-1,3) dithiophosphate de zinc, de formule:

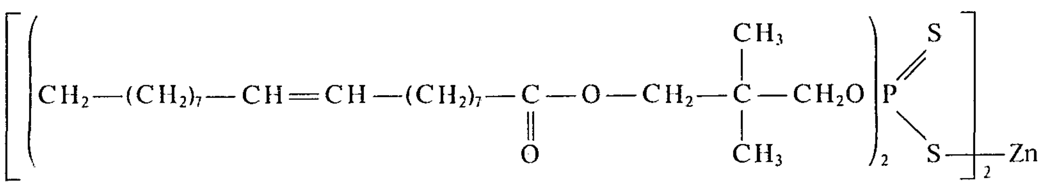

### a) Préparation du monooléate du 2,2 diméhyl-1,3 propane diol

Dans un ballon tricol de 1 litre on charge:

- 282 g (soit 1 mole) d'acide oléique
- 416 g (soit 4 moles) de néopentylglycol (≃ 1% d'eau)
- 14 g de terre acide à base d'acide chlorhydrique (terre CLARCIL commercialisée par Sud-Chemie A-G).

On chauffe à 180°C pendant 4 heures en maintenant une pression de 50 mm Hg; 24,5 g d'eau distillent.

Après refroidissement, on charge 300 g d'hexane et 100 g d'eau; le milieu est agité pendant 30 minutes puis on sépare la couche organique par décantation. Cette opération de lavage est répétée 3 fois.

La phase organique recueillie est distillée pour éliminer le solvant.

On récupère ainsi 356 g (soit 0,967 mole) de l'ester recherché présentant une pureté de 95,6% (déterminée par résonance magnétique nucléaire), l'impureté restante étant du néopentylglycol.

Le rendement en ester est de 96,7% par rapport à l'acide oléique.

### b) Préparation de l'acide bis O,O (monooléate de diméthyl-2,2 propane diyle-1,3) dithiophosphorique

Dans un ballon tricol de 1 litre, on charge 346,4 g (soit 0,9 mole) de l'ester préparé ci-dessus, puis en 3 heures 50 g (soit 0,225 mole) de pentasulfure de phosphore en maintenant la température à 115°C.

Apres l'addition de $P_2S_5$ on maintient la température à 115°C pendant 30 mn puis on élimine les traces d'$H_2S$ en diminuant la pression progressivement jusqu'à 30 mm de mercure.

On obtient 380 g de l'acide dithiophosphorique recherché, dont la composition déterminée par analyse élémentaire est la suivante:

| | Calculé | Trouvé |
|---|---|---|
| Phosphore | 3,73% | 3,6% |
| Soufre | 7,71% | 7,2% |

### c) Neutralisation par l'oxyde de zinc

Dans un ballon tricol de 1 litre on charge les 380 g (soit 0,46 mole) de l'acide dithiophosphorique ci-dessus préparé, puis en 1 heure 22,3 g (soit 0,276 mole) d'oxyde de zinc (ce qui représente un excès de 30% par rapport à la stoechiométrie) en maintenant la température à 105°C.

Après l'addition de l'oxyde de zinc, on diminue progressivement la pression jusqu'à 30 mm de mercure pour éliminer l'eau de formation.

Après refroidissement le milieu est repris par 500 ml d'hexane puis filtré pour éliminer l'oxyde de zinc en excès.

On obtient ainsi 315 g du dithiophosphate de zinc recherché, qui est un composé visqueux et limpide, légèrement coloré présentant un pH de 5,2.

La composition du produit obtenu, déterminée par analyse élémentaire est la suivante:

| | Calculé | Trouvé |
|---|---|---|
| Phosphore | 3,60% | 3,7% |
| Zinc | 3,78% | 3,5% |
| Soufre | 7,43% | 7,2% |

Exemple 2

Préparation du bis O,O (monooctanoate de diméthyl-2,2 propanediyle-1,3) dithiophosphate de zinc, de formule:

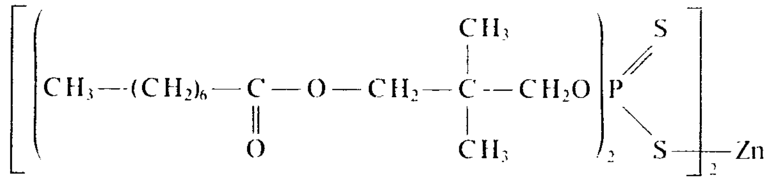

a) Préparation du monooctanoate du diméthyl-2,2 propanol-1

L'opération décrite à l'exemple 1 a) est réalisée à partir de:

- 144 g (soit 1 mole) d'acide octanoique
- 416 g (soit 4 moles) de néopentylglycol
- 14 g de clarcil

pendant 5 heures à 170° C.

On récupère avec un rendement de 80%, 188 g de l'ester recherché présentant une pureté de 98%.

b) Préparation de l'acide bis (monooctanoate de diméthyl-2,2 propanediyle-1,3) dithiophosphorique

L'opération décrite à l'exemple 1 b) est réalisée à partir de:

- 117,5 g (soit 0,5 mole) de l'ester préparé ci-dessus
- 27,8 g (soit 0,125 mole) de $P_2S_5$

On obtient 132 g de l'acide dithiophosphorique recherché dont la composition déterminée par analyse élémentaire est la suivante:

| | Calculé | Trouvé |
|---|---|---|
| Phosphore | 5,60% | 5,5% |
| Soufre | 11,55% | 11,2% |

c) Neutralisation par l'oxyde de zinc

L'opération décrite à l'exemple 1 c) est réalisée à partir de:

- 111 g (soit 0,2 mole) de l'acide dithiophosphorique préparé ci-dessus
- 10,5 g (soit 0,13 mole) de ZnO (excès de 30%)

On obtient ainsi 105 g du dithiophosphate de zinc recherché dont le pH est de 5,5 et dont la composition est la suivante:

| | Calculé | Trouvé |
|---|---|---|
| Phosphore | 5,29% | 5,1% |
| Zinc | 5,55% | 5,0% |
| Soufre | 10,93% | 10,8% |

Exemple 3

Préparation du bis O,O (monoacrylate de diméthyl-2,2 propanediyl-1,3) dithiophosphate de zinc, de formule:

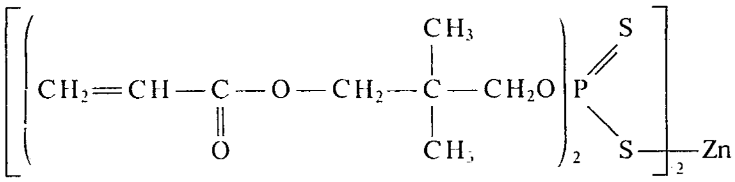

a) Préparation du monoacrylate de diméthyl-2,2 propanol-1

L'opération décrite à l'exemple 1 a) est réalisée à partir de:

- 72 g (soit 1 mole) d'acide arcylique
- 416 g (soit 4 moles) de néopentylglycol
- 14 g de clarcil

pendant 10 heures à 150° C.
On récupère avec un rendement de 52%, 98 g de l'ester recherché présentant une pureté de 84%.

b) Préparation de l'acide bis O,O (monoacrylate de diméthyl-2,2 propanediyle-1,3) dithiophosphorique

L'opération décrite à l'exemple 1 b) est réalisée à partir de:

- 91,6 g (soit 0,5 mole) de l'ester préparé ci-dessus
- 27,8 g (soit 0,125 mole) de $P_2S_5$

On obtient 97 g de l'acide dithiophosphorique recherché, dont la composition déterminée par analyse élémentaire est la suivante:

| | Calculé | Trouvé |
|---|---|---|
| Phosphore | 7,56% | 7,3% |
| Soufre | 15,61% | 15% |

c) Neutralisation par l'oxyde de zinc

L'opération décrite à l'exemple 1 c) est réalisée à partir de:

- 82 g (soit 0,2 mole) de l'acide dithiophosphorique préparé ci-dessus
- 10,5 g (soit 0,13 mole) de ZnO

On obtient 84 g de dithiophosphate de zinc recherché dont le pH est de 4,9 et dont la composition est la suivante:

| | Calculé | Trouvé |
|---|---|---|
| Phosphore | 7,02% | 6,9% |
| Zinc | 7,36% | 7,2% |
| Soufre | 14,50% | 13,9% |

Exemple 4

Préparation du bis O,O [mono(cyclopropane carboxylate) de diméthyl-2,2 propanediyle-1,3]dithiophosphate de zinc, de formule:

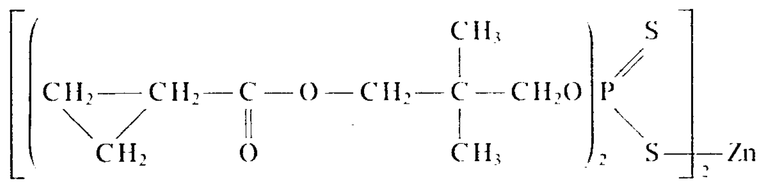

a) Préparation du mono(cyclopropane dicarboxylate) de diméthyl-2,2 propanol-1

L'opération décrite à l'exemple 1 a) est réalisée à partir de:

- 86 g (soit 1 mole) d'acide cyclopropane carboxylique
- 416 g (soit 4 moles) de néopentylglycol
- 14 g de clarcil

pendant 4 heures à 100° C.

On récupère avec un rendement de 77,6%, 150 g de l'ester recherché présentant une pureté de 89%.

b) Préparation de l'acide bis O,O [mono(cyclopropane carboxylate) de diméthyl-2,2 propanediyle-1,3] dithiophosphorique

L'opération décrite à l'exemple 1 b) est réalisée à partir de:

- 95,5 g (soit 0,5 mole) de l'ester préparé ci-dessus
- 27,8 g (soit 0,125 mole) de $P_2S_5$

On obtient 105 g de l'acide dithiophosphorique recherché dont la composition est la suivante:

| | Calculé | Trouvé |
|---|---|---|
| Phosphore | 7,08% | 6,9% |
| Soufre | 14,61% | 14,4% |

c) Neutralisation par l'oxyde de zinc

L'opération décrite à l'exemple 1 c) est réalisée à partir de:

- 87,5 g (soit 0,2 mole) de l'acide dithiophosphorique préparé ci-dessus
- 10,5 g (soit 0,13 mole) de ZnO (excès de 30%)

On obtient ainsi 90 g du dithiophosphate de zinc recherché dont le pH est de 5,1 et dont la composition est la suivante:

| | Calculé | Trouvé |
|---|---|---|
| Phosphore | 6,61% | 6,5% |
| Soufre | 13,66% | 13,4% |
| Zinc | 6,94% | 6,3% |

Exemple 5

Préparation du bis O,O [mono(cyclohexène-1 carboxylate) de diméthyl-2,2 propanediyl-1,3] dithiophosphate de zinc, de formule:

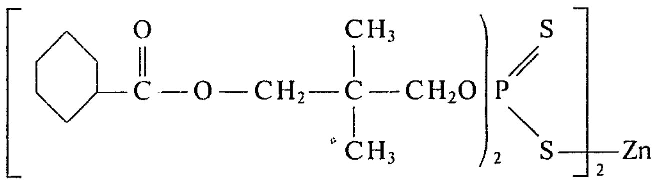

a) Préparation du mono(cyclohexène-1 carboxylate) de diméthyl-2,2 propanol-1

L'opération décrite, à l'exemple 1 a) est réalisée à partir de:

- 126 g (soit 1 mole) d'acide cyclohexène-1 carboxylique-1
- 416 g (soit 4 moles) de néopentylglycol
- 14 g de clarcil

pendant 6 heures à 160° C.
On récupère avec un rendement de 85,5%, 199 g de l'ester recherché présentant une pureté de 91%.

b) Préparation de l'acide bis O,O [mono(cyclohexène-carboxylate) de diméthyl-2,2 propanediyl-1,3] dithiophosphorique

L'opération décrite à l'exemple 1 b) est réalisée à partir de:

- 84,8 g (soit 0,4 mole) de l'ester préparé ci-dessus
- 22,2 g (soit 0,1 mole) de $P_2S_5$

On obtient 98 g de l'acide dithiophosphorique recherché dont la composition est la suivante:

| | Calculé | Trouvé |
|---|---|---|
| Phosphore | 5,98% | 5,7% |
| Soufre | 12,37% | 12,0% |

c) Neutralisation par l'oxyde de zinc

L'opération décrite à l'exemple 1 c) est réalisée à partir de:

- 51,8 g (soit 0,1 mole) de l'acide dithiophosphorique préparé ci-dessus
- 5,3 g (soit 0,065 mole) de ZnO (excès de 30%)

On obtient ainsi 50 g du dithiophosphate de zinc recherché dont le pH est de 5,0 et dont la composition est la suivante:

| | Calculé | Trouvé |
|---|---|---|
| Phosphore | 5,64% | 5,3% |
| Zinc | 5,91% | 5,1% |
| Soufre | 11,65% | 11,3% |

## Exemple 6

Préparation du bis O,O [mono(furan-2 carboxylate) de diméthyl-2,2 propanediyl-1,3] dithiophosphate de zinc, de formule:

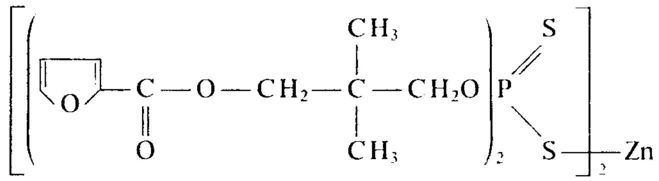

a) Préparation du mono(furan-2 carboxylate) de diméthyl-2,2 propanol-1

L'opération décrite à l'exemple 1 a) est réalisée à partir de:

- 112 g (soit 1 mole) d'acide furan-2 carboxylique
- 416 g (soit 4 moles) de néopentylglycol
- 14 g de Clarcil

pendant 7 heures à 170° C.

On récupère avec un rendement de 81,8% 180 g de l'ester recherché présentant une pureté de 90%.

b) Préparation de l'acide bis O,O [mono(furan-2 carboxylate) de diméthyl-2,2 propanediyl-1,3] dithiophosphorique

L'opération décrite à l'exemple 1 b) est réalisée à partir de:

- 132 g (soit 0,6 mole) de l'ester préparé ci-dessus
- 33,5 g (soit 0,15 mole) de $P_2S_5$

On obtient 140 g de l'acide dithiophosphorique recherché dont la composition est la suivante:

| | Calculé | Trouvé |
|---|---|---|
| Phosphore | 6,33% | 6,1% |
| Soufre | 13,06% | 12,8% |

c) Neutralisation par l'oxyde de zinc

L'opération décrite à l'exemple 1 c) est réalisée à partir de:

- 98 g (soit 0,2 mole) de l'acide dithiophosphorique préparé ci-dessus
- 10,5 g (soit 0,13 mole) de ZnO (excès de 30%)

On obtient ainsi 101 g du dithiophosphate de zinc recherché dont le pH est de 5,3 et dont la composition est la suivante:

| | Calculé | Trouvé |
|---|---|---|
| Phosphore | 5,94% | 5,7% |
| Zinc | 6,23% | 6,0% |
| Soufre | 12,27% | 11,9% |

Exemple 7

Préparation du bis O,O (monoabiétate de diméthyl-2,2 propanediyl-1,3) dithiophosphate de zinc, de formule:

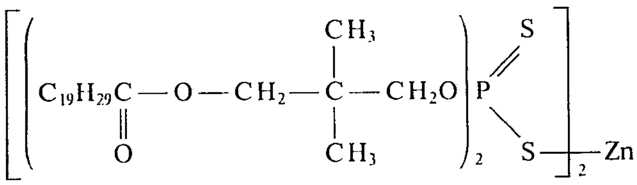

a) Préparation du monoabiétate de diméthyl-2,2 propanol-1

L'opération décrite à l'exemple 1 a) est réalisée à partir de:

- 293 g (soit 1 mole) d'acide abiétique
- 146 g (soit 4 moles) de néopentylglycol
- 14 g de Clarcil

pendant 5 heures à 150° C.
On récupère avec un rendement de 70%, 280 g de l'ester recherché présentant une pureté de 95%.

b) Préparation de l'acide bis O,O (monoabiétate de diméthyl-2,2 propanediyl-1,3) dithiophosphorique

L'opération décrite à l'exemple 1 b) est réalisée à partir de:

- 240 g (soit 0,6 mole) de l'ester préparé ci-dessus
- 33,5 g (soit 0,15 mole) de $P_2S_5$

On obtient 250 g de l'acide dithiophosphorique recherché dont la composition est la suivante:

| | Calculé | Trouvé |
|---|---|---|
| Phosphore | 3,64% | 3,5% |
| Soufre | 7,51% | 7,5% |

c) Neutralisation par l'oxyde de zinc

L'opération décrite à l'exemple 1 c) est réalisée à partir de:

- 170 g (soit 0,2 mole) de l'acide dithiophosphorique préparé ci-dessus
- 10,5 g (soit 0,13 mole) de ZnO (excès de 30%)

On obtient ainsi 165 g du dithiophosphate de zinc recherché dont le pH est de 5,2 et dont le composition est la suivante:

| | Calculé | Trouvé |
|---|---|---|
| Phosphore | 3,51% | 3,4% |
| Zinc | 3,68% | 3,4% |
| Soufre | 7,24% | 7,0% |

Exemple 8

Préparation du bis O,O [mono(diméthyl-2,3 benzoate) de diméthyl-2,2 propanediyl-1,3] dithiophosphate de zinc, de formule:

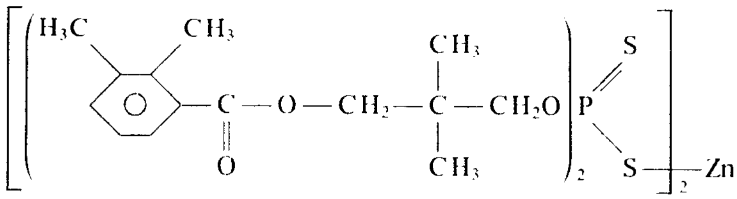

a) Préparation du mono(diméthyl-2,3 benzoate) de diméthyl-2,2 propanol-1

L'opération décrite à l'exemple 1 a) est réalisée à partir de:

- 150 g (soit 1 mole) d'acide diméthyl-2,3 benzoique
- 416 g (soit 4 moles) de néopentylglycol
- 14 g de Clarcil

pendant 5 heures à 150° C.

On récupère avec un rendement de 50%, 138 g de l'ester recherché présentant une pureté de 85%.

b) Préparation de l'acide bis O,O [mono(diméthyl-2,3 benzoate) de diméthyl-2,2 propanediyle-1,3] dithiophosphorique

L'opération décrite à l'exemple 1 b) est réalisée à partir de:

- 110 g (soit 0,4 mole) de l'ester préparé ci-dessus
- 22,2 g (soit 0,1 mole) de $P_2S_5$

On obtient 103 g de l'acide dithiophosphorique recherché dont la composition est la suivante:

| | Calculé | Trouvé |
|---|---|---|
| Phosphore | 5,48% | 5,3% |
| Zinc | 11,31% | 11,1% |

c) Neutralisation par l'oxyde de zinc

L'opération décrite à l'exemple 1 c) est réalisée à partir de:

- 84,9 g (soit 0,15 mole) de l'acide dithiophosphorique préparé ci-dessus
- 7,9 g (soit 0,0975 mole) de ZnO (excès de 30%)

On obtient ainsi 85 g du dithiophosphate de zinc recherché dont la pH est de 5,3 et dont la composition est la suivante:

| | Calculé | Trouvé |
|---|---|---|
| Phosphore | 5,19% | 5,1% |
| Zinc | 5,44% | 5,1% |
| Soufre | 10,71% | 10,2% |

Exemple 9

Préparation du bis O,O [mono(n-octyl-4 benzoate) de diméthyl-2,2 propanediyl-1,3] dithiophosphate de zinc, de formule:

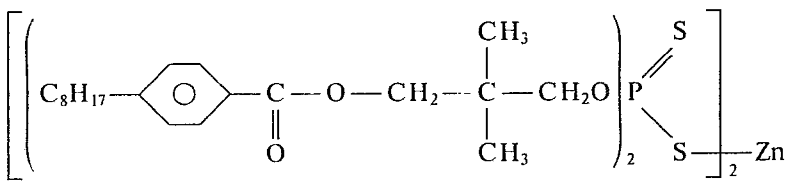

a) Préparation du mono(para n-octyl benzoate) de diméthyl-2,2 propanol-1

L'opération décrite à l'exemple 1 a) est réalisée à partir de:

- 234 g (soit 1 mole) d'acide para n-octylbenzoique
- 416 g (soit 4 moles) de néopentylglycol
- 14 g de Clarcil

pendant 7 heures à 170° C.

On récupère avec un rendement de 88%, 298 g de l'ester recherché présentant une pureté de 95%.

b) Préparation de l'acide O,O [mono(n-octyl-4 benzoate) de diméthyl-2,2 propanediyl-1,3] dithiophosphorique

L'opération décrite à l'exemple 1 b) est réalisée à partir de:

- 202 g (soit 0,6 mole) de l'ester préparé ci-dessus
- 33,5 g (soit 0,15 mole) de $P_2S_5$

On obtient 201 g de l'acide dithiophosphorique recherché dont la composition est la suivante:

| | Calculé | Trouvé |
|---|---|---|
| Phosphore | 4,41% | 4,3% |
| Soufre | 9,10% | 9,0% |

c) Neutralisation par l'oxyde de zinc

L'opération décrite à l'exemple 1 c) est réalisée à partir de:

- 140,6 g (soit 0,2 mole) de l'acide dithiophosphorique préparé ci-dessus
- 10,5 g (soit 0,13 mole) de ZnO (excès de 30%)

On obtient ainsi 138 g de dithiophosphate de zinc recherché dont le pH est de 5,4 et dont la composition est la suivante:

| | Calculé | Trouvé |
|---|---|---|
| Phosphore | 4,22% | 4,1% |
| Zinc | 4,42% | 4,2% |
| Soufre | 8,71% | 8,5% |

Exemple 10

Préparation du bis O,O (monocinnamate de diméthyl-2,2 propanediyl-1,3) dithiophosphate de zinc, de formule:

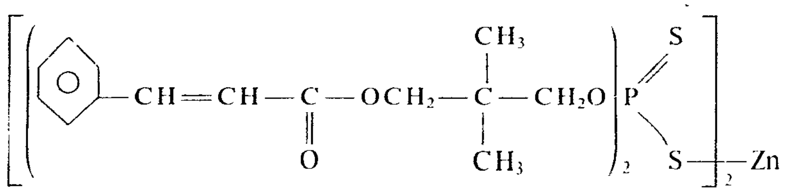

a) Préparation du monocinnamate de diméthyl-2,2 propanol-1

L'opération décrite à l'exemple 1 a) est réalisée à partir de:

- 148 g (soit 1 mole) d'acide cinnamique
- 416 g (soit 4 moles) de néopentylglycol
- 14 g de Clarcil

pendant 6 heures à 170° C.

On récupère avec un rendement de 60%, 158 g de l'ester recherché présentant une pureté de 89%.

b) Préparation de l'acide bis O,O (mono-cinnamate de diméthyl-2,2 propanediyl-1,3) dithiophosphorique

L'opération décrite à l'exemple 1 b) est réalisée à partir de:

- 132 g (soit 0,5 mole) de l'ester preparé ci-dessus
- 27,8 g (soit 0,125 mole) de $P_2S_5$

On obtient 128 g de l'acide dithiophosphorique recherché dont la composition est la suivante:

| | Calculé | Trouvé |
|---|---|---|
| Phosphore | 5,52% | 5,4% |
| Soufre | 11,39% | 11,2% |

c) Neutralisation par l'oxyde de zinc

L'opération décrite à l'exemple 1 c) est réalisée partir de:

- 112 g (soit 0,2 mole) de l'acide dithiophosphorique préparé ci-dessus
- 10,5 g (soit 0,13 mole) de ZnO (excès de 30%)

On obtient ainsi 105 g de dithiophosphate de zinc recherché dont le pH est de 5,4 et dont la composition est la suivante:

| | Calculé | Trouvé |
|---|---|---|
| Phosphore | 5,22% | 5,2% |
| Zinc | 5,48% | 5,2% |
| Soufre | 10,78% | 10,5% |

Exemple 11

Préparation du bis O,O (monofuranacrylate-2 de diméthyl-2,2 propanediyle-1,3) dithiophosphate de zinc, de formule:

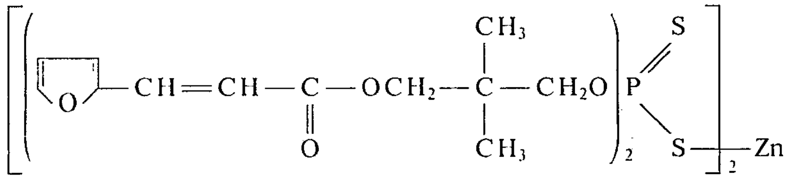

a) Préparation du monofuranacrylate-2 de diméthyl-2,2 propanol-1

L'opération décrite à l'exemple 1 a) est réalisée à partir de:

- 138 g (soit 1 mole) d'acide furanacrylique-2
- 416 g (soit 4 moles) de néopentylglycol
- 14 g de Clarcil

pendant 7 heures à 160° C.
On récupère avec un rendement de 40%, 102 g de l'ester recherché présentant une pureté de 88%.

b) Préparation de l'acide bis O,O (monofuranacrylate-2 de diméthyl-2,2 propanediyl-1,3) dithiophosphorique

L'opération décrite à l'exemple 1 b) est réalisée à partir de:

- 77 g (soit 0,3 mole) de l'ester préparé ci-dessus
- 16,7 g (soit 0,075 mole) de $P_2S_5$

On obtient 72 g de l'acide dithiophosphorique recherché dont la composition est la suivante:

| | Calculé | Trouvé |
|---|---|---|
| Phosphore | 5,72% | 5,65% |
| Soufre | 11,81% | 11,7% |

c) Neutralisation par l'oxyde de zinc

L'opération décrite à l'exemple 1 c) est réalisée à partir de:

- 54 g (soit 0,1 mole) de l'acide dithiophosphorique préparé ci-dessus
- 5,3 g (soit 0,06 mole) de ZnO (excès de 30%)

On obtient ainsi 50 g du dithiophosphate de zinc recherché dont le pH est de 3,7 et dont la composition est la suivante:

| | Calculé | Trouvé |
|---|---|---|
| Phosphore | 5,41% | 5,4% |
| Zinc | 5,67% | 5,0% |
| Soufre | 11,16% | 10,9% |

Exemple 12

Préparation du bis O,O [mono(p-trifluorométhylbenzoate) de diméthyl-2,2 propanediyl-1,3] dithiophosphate de zinc, de formule:

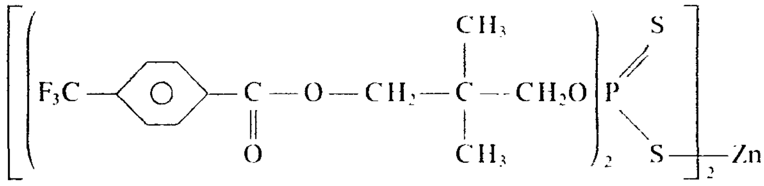

a) Préparation du mono(p-trifluorométhylbenzoate) de diméthyl-2,2 propanol-1

L'opération décrite à l'exemple 1 a) est réalisée à partir de:

- 190 g (soit 1 mole) d'acide p-trifluorométhylbenzoique
- 416 g (soit 4 moles) de néopentylglycol
- 14 g de Clarcil

pendant 7 heures à 170° C.

On récupère avec un rendement de 87,7%, 269 g d'ester recherché présentant une pureté de 90%.

b) Préparation de l'acide bis O,O [mono(p-trifluorométhylbenzoate) de diméthyl-2,2 propanediyl-1,3] dithiophosphorique

L'opération décrite à l'exemple 1 b) est réalisée à partir de:

- 184 g (soit 0,6 mole) de l'ester préparé ci-dessus
- 33,5 g (soit 0,15 mole) de $P_2S_5$

On obtient 190 g de l'acide dithiophosphorique recherché dont la composition est la suivante:

| | Calculé | Trouvé |
|---|---|---|
| Phosphore | 4,80% | 4,6% |
| Soufre | 9,91% | 9,7% |

c) Neutralisation par l'oxyde de zinc

L'opération décrite à l'exemple 1 c) est réalisée à partir de:

- 129 g (soit 0,2 mole) de l'acide dithiophosphorique préparé ci-dessus
- 10,5 g (soit 0,13 mole) de ZnO (excès de 30%)

On obtient ainsi 130 g de dithiophosphate de zinc recherché dont le pH est de 4,5 et dont la composition est la suivante:

| | Calculé | Trouvé |
|---|---|---|
| Phosphore | 4,58% | 4,4% |
| Zinc | 4,80% | 4,4% |
| Soufre | 9,45% | 9,2% |

Exemple 13

Préparation du bis O,O [mono(dibromo-9,10 octadécanoate) de diméthyl-2,2 propanediyl-1,3] dithiophosphate de zinc, de formule:

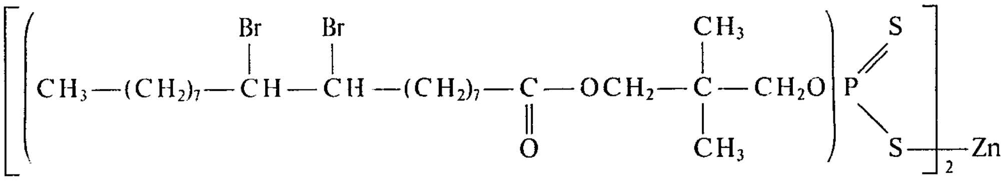

a) Préparation du mono(dibromo-9,10 octadécanoate) de diméthyl-2,2 propanol-1

L'opération décrite à l'exemple 1 a) est réalisée à partir de:

- 442 g (soit 1 mole) d'acide dibromo-9,10 octadécanoïque
- 416 g (soit 4 moles) de néopentylglycol
- 14 g de Clarcil

pendant 7 heures à 170° C.

On récupère avec un rendement de 72,1%, 428 g de l'ester recherché présentant une pureté de 89%.

b) Préparation de l'acide bis O,O [mono(bromo-9,10 octadécanoate) de diméthyl-2,2 propanediyl-1,3] dithiophosphorique

L'opération décrite à l'exemple 1 b) est réalisée à partir de:

- 360 g (soit 0,6 mole) de l'ester préparé ci-dessus
- 33,5 g (soit 0,15 mole) de $P_2S_5$

On obtient 350 g de l'acide dithiophosphorique recherché dont la composition est la suivante:

| | Calculé | Trouvé |
|---|---|---|
| Phosphore | 2,70% | 2,6% |
| Soufre | 5,57% | 5,4% |

c) Neutralisation par l'oxyde de zinc

L'opération décrite à l'exemple 1 c) est réalisée à partir de:

- 237 g (soit 0,2 mole) de l'acide dithiophosphorique préparé ci-dessus
- 10,5 g (soit 0,13 mole) de ZnO (excès de 30%)

On obtient ainsi 200 g du dithiophosphate de zinc recherché dont le pH est de 5,1 et dont la composition est la suivante:

| | Calculé | Trouvé |
|---|---|---|
| Phosphore | 2,62% | 2,7% |
| Zinc | 2,75% | 2,5% |
| Soufre | 5,41% | 5,3% |

## Exemple 14

Préparation du bis O,O [mono(bromo-11 undecanoate) du diméthyl-2,2 propanediyl-1,3] dithiophosphate de zinc, de formule:

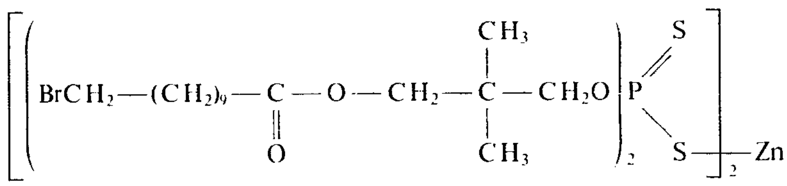

a) Préparation du mono(bromo-11 undecanoate) de diméthyl-2,2 propanol-1

L'opération décrite à l'exemple 1 a) est réalisée à partir de:

- 265 g (soit 1 mole) d'acide bromo-11 undecanoique
- 416 g (soit 4 moles) de néopentylglycol
- 14 g de Clarcil

pendant 4 heures à 170° C.

On récupère avec un rendement de 86,6%, 334 g de l'ester recherché présentant une pureté de 91%.

b) Préparation de l'acide bis O,O [mono(bromo-11 undecanoate) de diméthyl-2,2 propanediyl-1,3] dithiophosphorique

L'opération décrite à l'exemple 1 b) est réalisée à partir de:

- 232 g (soit 0,6 mole) de l'ester préparé ci-dessus
- 33,5 g (soit 0,15 mole) de $P_2S_5$

On obtient 220 g de l'acide dithiophosphorique recherché dont la composition est la suivante:

| | Calculé | Trouvé |
|---|---|---|
| Phosphore | 3,89% | 3,6% |
| Soufre | 8,04% | 7,8% |

c) Neutralisation par l'oxyde de zinc

L'opération décrite à l'exemple 1 c) est réalisée à partir de:

- 159 g (soit 0,2 mole) de l'acide dithiophosphorique préparé ci-dessus
- 10,5 g (soit 0,13 mole) de ZnO (excès de 30%)

On obtient ainsi 160 g du dithiophosphate de zinc recherché dont le pH est de 5,1 et dont la composition est la suivante:

| | Calculé | Trouvé |
|---|---|---|
| Phosphore | 3,75% | 3,6% |
| Zinc | 3,93% | 3,2% |
| Soufre | 7,73% | 7,8% |

### Exemple 15

Préparation du bis O,O [mono(dichloro-2,3 propanoate) de diméthyl-2,2 propanediyl-1,3] dithiophosphate de zinc, de formule:

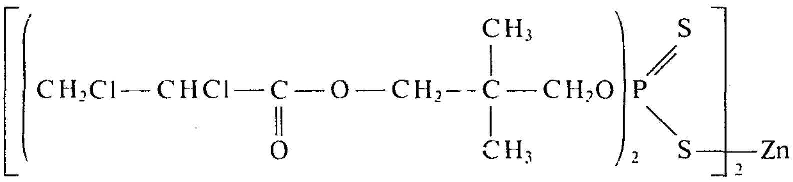

a) Préparation du mono(dichloro-2,3 propanoate) de diméthyl-2,2 propanol-1

L'opération décrite à l'exemple 1 a) est réalisée à partir de:

- 143 g (soit 1 mole) d'acide dichloropropanoique
- 416 g (soit 4 moles) de néopentylglycol
- 14 g de Clarcil

pendant 5 heures à 140° C.

On récupère avec un rendement de 77,4%, 197 g de l'ester recherché présentant une pureté de 90%.

b) Préparation de l'acide bis O,O [mono(dichloro-2,3 propanoate) de diméthyl-2,2 propanediyl-1,3] dithiophosphorique

L'opération décrite à l'exemple 1 b) est réalisée à partir de:

- 153 g (soit 0,6 mole) de l'ester préparé ci-dessus
- 33,5 g (soit 0,15 mole) de $P_2S_5$

On obtient 159 g de l'acide dithiophosphorique recherché dont la composition est la suivante:

| | Calculé | Trouvé |
|---|---|---|
| Phosphore | 5,62% | 5,6% |
| Soufre | 11,59% | 11,65% |

c) Neutralisation par l'oxyde de zinc

L'opération décrite à l'exemple 1 c) est réalisée à partir de:

- 110 g (soit 0,2 mole) de l'acide dithiophosphorique préparé ci-dessus
- 10,5 g (soit 0,13 mole) de ZnO (excès de 30%)

On obtient ainsi 108 g de dithiophosphate de zinc recherché dont le pH est de 5,0 et dont la composition est la suivante:

| | Calculé | Trouvé |
|---|---|---|
| Phosphore | 5,31% | 5,2% |
| Zinc | 5,57% | 5,1% |
| Soufre | 10,97% | 10,8% |

Exemple 16

Préparation du bis O,O mono(p-chlorobenzoate)
de diméthyl-2,2 propanediyl-1,3 dithiophosphate de zinc, de formule:

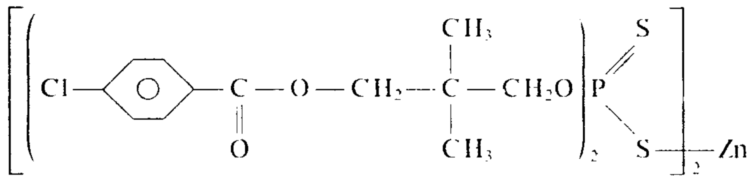

a) Préparation du mono(p-chlorobenzoate de diméthyl-2,2 propanol-1)

L'opération décrite à l'exemple 1 a) est réalisée à partir de:

- 156,5 g (soit 1 mole) d'acide p-chlorobenzoique
- 416 g (soit 4 moles) de néopentylglycol
- 14 g de Clarcil

pendant 6 heures à 160° C.

On récupère avec rendement de 76%, 190 g de l'ester recherché présentant une pureté de 97%.

b) Préparation de l'acide bis O,O [mono(p-chlorobenzoate)
de diméthyl-2,2 propanediyl-1,3] dithiophosphorique

L'opération décrite à l'exemple 1 b) est réalisée à partir de:

- 150 g (soit 0,6 mole) de l'ester préparé ci-dessus
- 33,5 g (soit 0,15 mole) de $P_2S_5$

On obtient 160 g de l'acide dithiophosphorique recherché dont la composition est la suivante:

| | Calculé | Trouvé |
|---|---|---|
| Phosphore | 5,35% | 5,1% |
| Soufre | 11,05% | 10,9% |

c) Neutralisation par l'oxyde de zinc

L'opération à l'exemple 1 c) est réalisée à partir de:

- 115,8 g (soit 0,2 mole) d'acide dithiophosphorique préparé ci-dessus
- 10,5 g (soit 0,13 mole) de ZnO (excès de 30%)

On obtient ainsi 110 g de dithiophosphate de zinc recherché dont le pH est de 5,4 et dont la composition est la suivante:

| | Calculé | Trouvé |
|---|---|---|
| Phosphore | 5,08% | 4,9% |
| Zinc | 5,32% | 5,1% |
| Soufre | 10,48% | 9,8% |

Exemple 17

Préparation du bis O,O (mononicotinate de diméthyl-2,2 propanediyl-1,3) dithiophosphate de zinc, de formule:

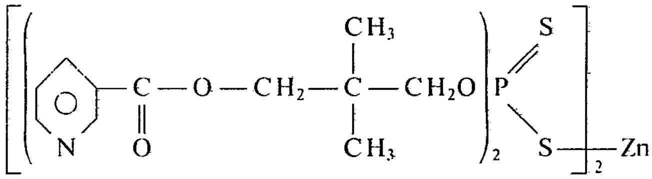

a) Préparation du mononicotinate de diméthyl-2,2 propanol-1

L'opération décrite à l'exemple 1 a) est réalisée à partir de:

- 123 g (soit 1 mole) d'acide nicotinique
- 416 g (soit 4 moles) de néopentylglycol
- 14 g de Clarcil

pendant 6 heures à 190° C.

On récupère avec un rendement de 53%, 112 g de l'ester recherché présentant une pureté de 99%.

b) Préparation de l'acide bis O,O (mono-nicotinate de diméthyl-2,2 propanediyl-1,3) dithiophosphorique

L'opération décrite à l'exemple 1 b) est réalisée à partir de:

- 85 g (soit 0,4 mole) de l'ester préparé ci-dessus
- 22,2 g (soit 0,1 mole) de $P_2S_5$

On obtient 98 g de l'acide dithiophosphorique recherché dont la composition est la suivante:

| | Calculé | Trouvé |
|---|---|---|
| Phosphore | 6,05% | 6,0% |
| Soufre | 12,50% | 11,9% |

c) Neutralisation par l'oxyde de zinc

L'opération décrite à l'exemple 1 c) est réalisée à partir de:

- 51,2 g (soit 0,1 mole) de l'acide dithiophosphorique préparé ci-dessus
- 5,3 g (soit 0,065 mole) de ZnO (excès de 30%)

On obtient ainsi 49 g du dithiophosphate de zinc recherché dont le pH est de 3,7 et dont la composition est la suivante:

| | Calculé | Trouvé |
|---|---|---|
| Phosphore | 5,70% | 5,7% |
| Zinc | 5,98% | 5,7% |
| Soufre | 11,78% | 10,7% |

Exemple 18

Préparation du bis O,O (monostéarate de diméthyl-2,2 propanediyl-1,3) dithiophosphate de zinc, de formule:

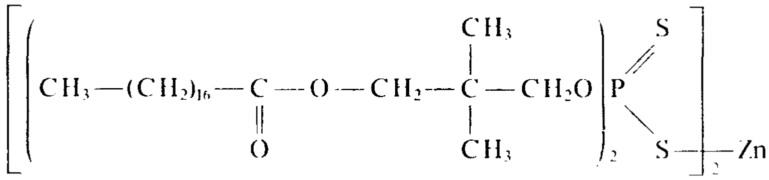

a) Préparation du monostéarate de diméthyl-2,2 propanol-1

L'opération décrite à l'exemple 1 a) est réalisée à partir de:

- 284 g (soit 1 mole) d'acide stéarique
- 416 g (soit 4 moles) de néopentylglycol
- 14 g de Clarcil

pendant 3 heures à 130° C.

On récupère avec un rendement de 80,5%, 298 g de l'ester recherché présentant une pureté de 100%.

b) Préparation de l'acide bis O,O (monostéarate de diméthyl-2,2 propanediyl-1,3) dithiophosphorique

L'opération décrite à l'exemple 1 b) est réalisée à partir de:

- 222 g (soit 0,6 mole) de l'ester préparé ci-dessus
- 32,5 g (soit 0,15 mole) de $P_2S_5$

On obtient 240 g de l'acide dithiophosphorique recherché dont la composition est la suivante:

| | Calculé | Trouvé |
|---|---|---|
| Phosphore | 3,72% | 3,62% |
| Soufre | 7,67% | 7,2% |

c) Neutralisation par l'oxyde de zinc

L'opération décrite à l'exemple 1 c) est réalisée à partir de:

- 167 g (soit 0,2 mole) de l'acide dithiophosphorique préparé ci-dessus
- 10,5 g (soit 0,13 mole) de ZnO (excès de 30%)

On obtient 165 g du dithiophosphate de zinc recherché dont le pH est de 5,4 et dont la composition est la suivante:

| | Calculé | Trouvé |
|---|---|---|
| Phosphore | 3,58% | 3,3% |
| Zinc | 3,76% | 3,5% |
| Soufre | 7,39% | 7,1% |

Exemple 19

**Préparation du bis O,O (monoacétate de diméthyl-2,2 propanediyl-1,3) dithiophosphate de zinc, de formule:**

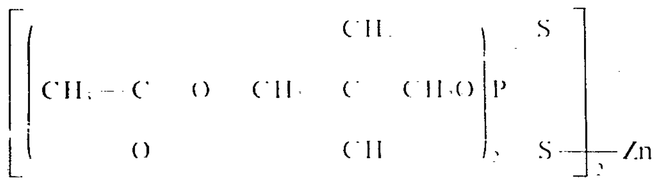

a) Préparation du monoacétate de diméthyl-2,2 propanol-1

L'opération décrite à l'exemple 1 a) est réalisée à partir de:

- 60 g (soit 1 mole) d'acide acetique
- 416 g (soit 4 moles) de néopentylglycol
- 14 g de Clarcil

pendant 5 heures à 100° C.

On récupère avec un rendement de 32%, 59 g de l'ester recherché présentant une pureté de 80%.

b) Préparation de l'acide bis O,O (mono acétate de diméthyl-2,2 propanediyl-1,3) dithiophosphorique

L'opération décrite à l'exemple 1 b) est réalisée à partir de:

- 55 g (soit 0,3 mole) de l'ester préparé ci-dessus
- 16,7 g (soit 0,075 mole) de $P_2S_5$

On obtient 50 g de l'acide dithiophosphorique recherché dont la composition est la suivante:

| | Calculé | Trouvé |
|---|---|---|
| Phosphore | 8,03% | 8,5% |
| Soufre | 16,58% | 16,5% |

c) Neutralisation par l'oxyde de zinc

L'opération décrite à l'exemple 1 c) est réalisée à partir de:

- 38,6 g (soit 0,1 mole) de l'acide dithiophosphorique préparé ci-dessus
- 5,3 g (soit 0,065 mole) de ZnO (excès de 30%)

On obtient ainsi 40 g de dithiophosphate de zinc recherché dont le pH est de 3,5 et dont la composition est la suivante:

| | Calculé | Trouvé |
|---|---|---|
| Phosphore | 7,43% | 7,6% |
| Zinc | 7,78% | 6,8% |
| Soufre | 15,33% | 14,0% |

Exemple 20

Préparation du bis O,O (monobenzoate de diméthyl-2,2 propanediyl-1,3) dithiophosphate de zinc, de formule:

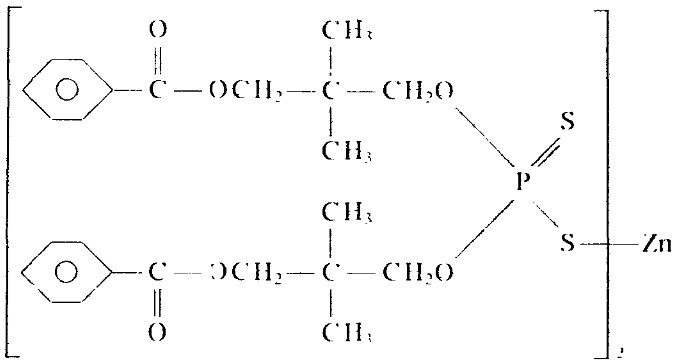

a) Préparation du monobenzoate de diméthyl-2,2 propanol-1

L'opération décrite à l'exemple 1 a) est réalisée à partir de:

- 122 g (soit 1 mole) d'acide benzoique
- 416 g (soit 4 moles) de néopentylglycol
- 14 g de Clarcil

pendant 7 heures à 170° C.

On récupère avec un rendement de 87%, 185 g de l'ester recherché présentant une pureté de 98%.

b) Préparation de l'acide bis O,O (monobenzoate de diméthyl-2,2 propanediyl-1,3) dithiophosphorique

L'opération décrite à l'exemple 1 b) est réalisée à partir de:

- 104 g (soit 0,5 mole) de l'ester préparé ci-dessus
- 27,8 g (soit 0,125 mole) de $P_2S_5$

On obtient 120 g d'acide dithiophosphorique de formule:

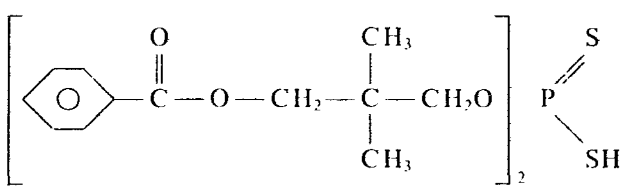

et dont la composition est la suivante:

| | Calculé | Trouvé |
|---|---|---|
| Phosphore | 6,08% | 6,21% |
| Soufre | 12,55% | 11,21% |

c) Neutralisation par l'oxyde de zinc

L'opération décrite à l'exemple 1 c) est réalisée à partir de:

- 102 g (soit 0,2 mole) de l'acide dithiophosphorique préparé ci-dessus
- 10,5 g (soit 0,13 mole) de ZnO (excès de 30%)

On obtient ainsi 105 g du dithiophosphate de zinc recherché dont le pH est de 3,5 et dont la composition est la suivante:

| | Calculé | Trouvé |
|---|---|---|
| Phosphore | 5,77% | 5,6% |
| Zinc | 6,05% | 6,5% |
| Soufre | 11,91% | 11,3% |

Exemple 21

Préparation du bis O,O mono(cyclohexane carboxylate) de dimethyl-2,2 propanediyle-1,3 dithiophosphate de zinc, de formule

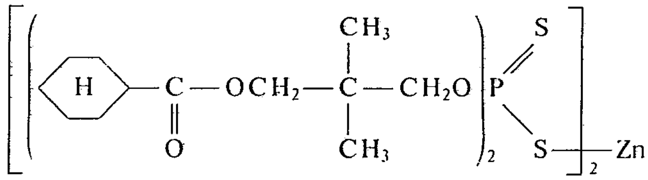

a) Préparation du mono(cyclohexanoate) de diméthyl-2,2 propanol-1

L'opération décrite à l'exemple 1 a) est réalisée à partir de:

- 128 g (soit 1 mole) d'acide cyclohexane carboxylique
- 416 g (soit 4 moles) de néopentylglycol
- 14 g de Clarcil

pendant 6 heures 30 à 160° C.

On récupère avec un rendement de 41,2%, 105 g de l'ester recherché présentant une pureté de 84%.

b) Préparation de l'acide bis O,O (monocyclohexanoate de diméthyl-2,2 propanediyle-1,3) dithiophosphorique

L'opération décrite à l'exemple 1 b) est réalisée à partir de:

- 85,5 g (soit 0,4 mole) de l'ester préparé ci-dessus
- 22,2 g (soit 0,1 mole) de $P_2S_5$

On obtient 100 g de l'acide dithiophosphorique recherché dont la composition est la suivante:

| | Calculé | Trouvé |
|---|---|---|
| Phosphore | 5,94% | 6,1% |
| Soufre | 12,26% | 12,8% |

c) Neutralisation par l'oxyde de zinc

L'opération décrite à l'exemple 1 c) est réalisée à partir de:

- 78,3 g (soit 0,15 mole) de l'acide dithiophosphorique préparé ci-dessus
- 7,9 g (soit 0,0975 mole) de ZnO (excès de 30%)

On obtient ainsi 70 g du dithiophosphate de zinc recherché dont le pH est de 3,6 et dont la composition est la suivante:

| | Calculé | Trouvé |
|---|---|---|
| Phosphore | 5,60% | 5,55% |
| Zinc | 5,87% | 6,5% |
| Soufre | 11,56% | 11,0% |

Exemple 22

Préparation du bis O,O (monométhacrylate de diméthyl-2,2 propanediyl-1,3) dithiophosphate de zinc, de formule:

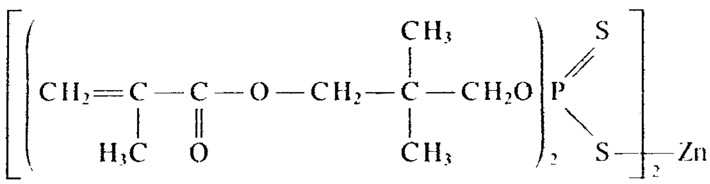

a) Préparation du monométhacrylate de diméthyl-2,2 propanol-1

L'opération décrite à l'exemple 1 a) est réalisée à partir de:

- 86 g (soit 1 mole) d'acide méthacrylique
- 416 g (soit 4 moles) de néopentylglycol
- 14 g de Clarcil

pendant 13 heures à 160° C.

On récupère avec un rendement de 40%, 82 g de l'ester recherché présentant une pureté de 83%.

b) Préparation de l'acide bis O,O (monométhacrylate de diméthyl-2,2 propanediyl-1,3) dithiophosphorique

L'opération décrite à l'exemple 1 b) est réalisée à partir de:

- 62 g (soit 0,3 mole) de l'ester préparé ci-dessus
- 16,7 g (soit 0,075 mole) de $P_2S_5$

On obtient 60 g de l'acide dithiophosphorique recherché dont la composition est la suivante:

| | Calculé | Trouvé |
|---|---|---|
| Phosphore | 7,08% | 7,0% |
| Soufre | 14,61% | 14,1% |

c) Neutralisation par l'oxyde de zinc

L'opération décrite à l'exemple 1 c) est réalisée à partir de:

- 44 g (soit 0,1 mole) de l'acide dithiophosphorique préparé ci-dessus
- 5,3 g (soit 0,065 mole) de ZnO (excès de 30%)

On obtient ainsi 40 g du dithiophosphate de zinc recherché dont le pH est de 4,9 et dont la composition est la suivante:

| | Calculé | Trouvé |
|---|---|---|
| Phosphore | 6,60% | 6,5% |
| Zinc | 6,92% | 6,7% |
| Soufre | 13,63% | 12,5% |

Exemple 23

Préparation du bis O,O (monooléate de l'éthyl-2 n-butyl-2 propanediyl-1,3) dithiophosphate de zinc, de formule:

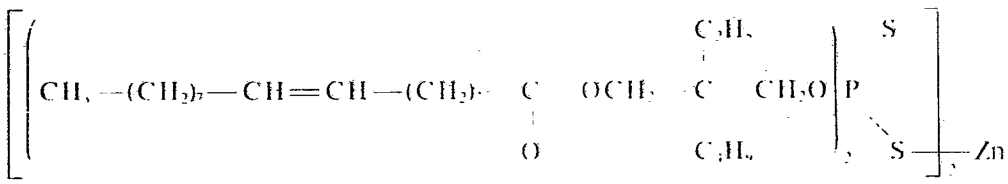

a) Préparation du monooléate de l'éthyl-2 n-butyl-2 propanol-1

L'opération décrite à l'exemple 1 a) est réalisée à partir de:

- 282 g (soit 1 mole) d'acide oléique
- 640 g (soit 4 moles) d'éthyl-2 n-butyl-2 propanediol-1,3
- 14 g de Clarcil

pendant 4 heures à 170° C.

On récupère avec un rendement de 91%, 402 g de l'ester recherché présentant une pureté de 96%.

b) Préparation de l'acide bis O,O (monooléate de l'éthyl-2 n-butyl-2 propanediyl-1,3) dithiophosphorique

L'opération décrite à l'exemple 1 b) est réalisée à partir de:

- 265 g (soit 0,6 mole) de l'ester préparé ci-dessus
- 33,5 g (soit 0,15 mole) de $P_2S_5$

On obtient 280 g de l'acide dithiophosphorique recherché dont la composition est la suivante:

| | Calculé | Trouvé |
|---|---|---|
| Phosphore | 3,29% | 3,40% |
| Soufre | 6,79% | 6,80% |

c) Neutralisation par l'oxyde de zinc

L'opération décrite à l'exemple 1 c) est réalisée à partir de:

- 188,5 g (soit 0,2 mole) de l'acide dithiophosphorique préparé ci-dessus
- 10,5 g (soit 0,13 mole) de ZnO (excès de 30%)

On obtient ainsi 180 g du dithiophosphate de zinc recherché dont le pH est de 5,8 et dont la composition est la suivante:

| | Calculé | Trouvé |
|---|---|---|
| Phosphore | 3,18% | 3,2% |
| Zinc | 3,34% | 3,2% |
| Soufre | 6,57% | 6,6% |

Exemple 24

Préparation du bis O,O (monoundécylénate de diméthyl-2,2 propanediyl-1,3) dithiophosphate de zinc, de formule:

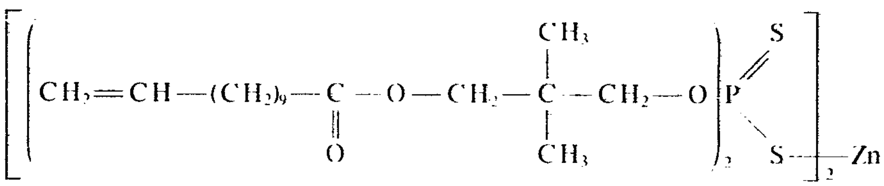

a) Préparation du monoundécylénate de diméthyl-2,2 propanediol

L'opération décrite à l'exemple 1 a) est réalisée à partir de:

- 184 g (soit 1 mole) d'acide undécylénique
- 416 g (soit 4 moles) de néopentylglycol
- 14 g de Clarcil

pendant 5 heures à 150° C.

On récupère avec un rendement de 90%, 248 g de l'ester recherché présentant une pureté de 98%.

b) Préparation de l'acide bis O,O (monoundécylénate de diméthyl-2,2 propanediyl-1,3) dithiophosphorique

L'opération décrite à l'exemple 1 b) est réalisée à partir de:

- 165 g (soit 0,6 mole) de l'ester préparé ci-dessus
- 33,5 g (soit 0,15 mole) de $P_2S_5$

On obtient 180 g de l'acide dithiophosphorique recherché dont la composition est la suivante:

| | Calculé | Trouvé |
|---|---|---|
| Phosphore | 4,89% | 4,7% |
| Soufre | 10,09% | 9,9% |

c) Neutralisation par l'oxyde de zinc

L'opération décrite à l'exemple 1 c) est réalisée à partir de:

- 127 g (soit 0,2 mole) de l'acide dithiophosphorique préparé ci-dessus
- 10,5 g (soit 0,13 mole) de ZnO (excès de 30%)

On obtient ainsi 115 g de dithiophosphate de zinc recherché dont le pH est de 5,1 et dont la composition est la suivante:

| | Calculé | Trouvé |
|---|---|---|
| Phosphore | 4,66% | 4,5% |
| Zinc | 4,88% | 4,7% |
| Soufre | 9,62% | 9,5% |

Exemple 25

On prépare une composition lubrifiante par addition à une huile 10 W 30 d'une quantité de produit obtenu à l'un des exemples 1 à 24 correspondant à 0,1% de phosphore.

Les propriétés mécaniques de cette composition sont testées sur:

1) Machine 4 billes, selon la norme ASTM D 2783-69 T; ce test donne le diamètre en mm de l'empreinte sous une charge de grippage de 70, 90, 110, et 130 kg, ainsi que la charge de soudure en kg.

2) Machine Falex; ce test donne l'usure de l'axe (c'est-à-dire de l'éprouvette d'usure) en mg au bout de 30 mn sous une pression de 500 lbs (271,5 kg).

La tenue à oxydation de cette composition est évaluée par le test d'oxydation Mobil consistant à oxyder 33 g d'huile contenant l'additif, en la chauffant à 180°C pendant 50 heures en présence de catalyseurs d'oxydation (Pb-Cu) sous un débit d'air de 14 l/h et à mesurer l'augmentation de viscosité à 210°F (98,9°C) de l'huile oxydée par rapport à l'huile neuve.

Des tests comparables sont réalisés sur des compositions dans lesquelles le produit de l'un des exemples 1 à 24 est remplacé par la même quantité, exprimée en % de phosphore, de l'un des additifs du commerce suivants, contenant tous du phosphore:

- Additif A: »Eca 5215« commercialisé par Exxon
- Additif B: »Lubrizol 797« commercialisé par Lubrizol
- Additif C: »Improvex 33« commercialisé par Rhône-Poulenc
- Additif D: »Oloa 260« commercialisé par Oronite
- Additif E: »Oloa 269« commercialisé par Oronite

Le résultat de l'ensemble de ces tests figure aux tableux I, I' et II.

On constante que les compositions faisant l'objet de l'invention possèdent un très bon niveau général de performances en ce qui concerne leurs propriétés mécaniques et présentent une bonne tenue de ces performances malgré l'oxydation. Les propriétés antioxydantes sont également très bonnes.

## Exemple 26

On prépare des compositions lubrifiantes par addition à une huile 10W 30 du produit préparé à l'exemple1, à différentes concentrations et on les compare à celles obtenues par addition des additifs D et E à différentes concentrations.

Ces compositions sont testées selon les méthodes décrites à l'exemple précédent.

Le résultat de ces tests figure au tableau III.

On constate que les compositions obtenues à l'aide des additifs de l'exemple 1 possèdent un très bon niveau général de performances, même à basse concentration en additif.

## Exemple 27

On prépare une composition lubrifiante par addition à une huile 10W 30 d'une quantité de produit obtenu à 1'exemple 1, correspondant à 0,1% en phosphore.

On prépare également des compositions lubrifiantes par addition de 0,1% de phosphore des additifs D, B et E.

Ces compositions sont testées quant à leur stabilité thermique suivant le test CINCINNATI/MILACRON; ce test consiste à maintenir les compositions à 135°C pendant 138 heures en présence de fer et de cuivre, puis on mesure les paramètres suivants:

- modification du poids des éprouvettes de fer et de cuivre
- poids de sédiments
- coloration de l'éprouvette de cuivre (test ASTM D 130)
- augmentation de viscosité.

Les résultats de ce test figurent au tableau IV.

On constate que la composition obtenue à l'aide de produit de l'exemple 1 présente une très bonne stabilité thermique par rapport à celle des produits du commerce, sans corrosion du fer ou du cuivre.

Tableau I

| Produit des Exemples | % en poids de produit | Propriétés Mécaniques | | | | | | | Oxydation |
|---|---|---|---|---|---|---|---|---|---|
| | | Avant oxydation | | | | | | Aprés oxydation Grippage Emprunte en mm – 100 kg | Augmentation de viscosité en % |
| | | Grippage – Emprunte en mm | | | | charge de soudure en kg | Falex en Mg | | |
| | | 70 kg | 90 kg | 110 kg | 130 kg | | | | |
| 1 | 2,78 | 0,4 | 0,8 | 2,5 | | 300 | 6,2 | 1,6 | 20 |
| 2 | 1,96 | 0,7 | 2,2 | – | | 300 | 7,1 | 1,7 | 40 |
| 3 | 1,45 | 1,7 | 2,6 | – | | 200 | 3,5 | – | gelée |
| 4 | 1,53 | 0,9 | 2,7 | – | | 250 | 4,5 | 1,8 | 200 |
| 5 | 1,89 | 0,5 | 2,0 | 2,6 | | 300 | 6,0 | 1,5 | 30 |
| 6 | 1,75 | 1,2 | 2,3 | – | | 300 | 9,7 | 1,5 | 60 |
| 7 | 2,94 | 0,4 | 1,5 | 2,5 | | 300 | 5,1 | 1,6 | 30 |
| 8 | 1,96 | 1,0 | 1,9 | 2,7 | | 300 | 5,7 | 1,7 | 40 |
| 9 | 2,44 | 0,4 | 0,7 | 2,4 | | 300 | 6,1 | 1,3 | 40 |
| 10 | 1,92 | 0,8 | 1,7 | 2,6 | | 300 | 7,1 | 1,7 | 70 |
| 11 | 1,85 | 1,6 | 2,5 | – | | 250 | 8,0 | 1,8 | 100 |
| 12 | 2,27 | 0,5 | 1,6 | 2,6 | | 300 | 5,4 | 1,4 | 40 |
| 13 | 3,70 | 0,5 | 0,8 | 2,4 | | 300 | 3,9 | 1,2 | 30 |
| 14 | 2,78 | 0,6 | 0,9 | 2,6 | | 300 | 4,2 | 1,3 | 40 |
| 15 | 1,92 | 1,4 | 2,7 | – | | 250 | 10,5 | 1,8 | 100 |
| 16 | 2,04 | 1,8 | 2,5 | – | | 300 | 7,0 | 1,5 | 70 |
| 17 | 1,75 | 0,4 | 1,8 | 2,2 | | 300 | 7,2 | 1,9 | 200 |
| 18 | 3,03 | 0,5 | 0,9 | 2,4 | | 300 | 5,4 | 1,5 | 40 |
| 19 | 1,32 | 2,2 | 2,7 | – | | 200 | 2,5 | – | gelée |
| 20 | 1,79 | 2,0 | 2,2 | – | | 250 | 7,3 | 1,6 | 100 |
| 21 | 1,80 | 0,4 | 2,0 | 2,6 | | 300 | 3,8 | 1,5 | 0 |
| 22 | 1,54 | 1,7 | 2,4 | – | | 200 | 4,3 | – | gelée |
| 23 | 3,12 | 0,9 | 2,0 | 2,5 | | 300 | 9,5 | 1,5 | 40 |
| 24 | 2,22 | 0,6 | 0,9 | 2,6 | | 300 | 6,4 | 1,6 | 30 |

Tableau II

| Produit | % en poids de produit | Propriétes Mécaniques | | | | | | | Oxydation |
|---|---|---|---|---|---|---|---|---|---|
| | | Avant oxydation | | | | | | Aprés oxydation Grippage Emprunte en mm — 100 kg | Augmentation de viscosité en % |
| | | Grippage — Emprunte en mm | | | | charge de soudure en kg | Falex en Mg | | |
| | | 70 kg | 90 kg | 110 kg | 130 kg | | | | |
| A | 3,73 | — | 0,5 | 0,5 | 2,5 | 300 | 8,7 | 2,0 | 80 |
| B | 4,08 | — | 2,6 | — | — | 200 | 1,0 | — | gelée |
| C | 1,24 | — | 2,5 | — | — | 250 | 14,9 | — | gelée |
| D | 3,45 | — | 2,6 | — | — | 300 | 23,0 | 2,4 | 90 |
| E | 1,35 | — | 0,5 | 2,2 | — | 250 | 10,5 | 2,6 | 150 |

Tableau III

| Produit | % en poids de produit | Propriétés Mécaniques | | | | | | | Oxydation |
|---|---|---|---|---|---|---|---|---|---|
| | | Avant oxydation | | | | | | Aprés oxydation Grippage Emprunte en mm — 100 kg | Augmentation de viscosité en % |
| | | Grippage — Emprunte en mm | | | | charge de soudure en kg | Falex en Mg | | |
| | | 70 kg | 90 kg | 110 kg | 130 kg | | | | |
| ex 1 | 0,1 | 2,3 | 3 | — | — | 200 | — | — | gelée |
| — | 0,5 | 2,4 | 2,4 | — | — | 250 | 12 | 2,6 | 150 |
| — | 1,5 | 2 | 2 | — | — | 300 | 9,5 | 2 | 30 |
| — | 2,78 | 0,4 | 0,8 | 2,5 | — | 300 | 6,2 | 1,6 | 20 |
| — | 4,5 | 0,3 | 0,6 | 2,1 | — | 300 | 4,6 | 1,4 | 15 |
| E | 0,1 | 0,7 | 2,4 | — | — | 200 | — | — | gelée |
| | 1 | 0,6 | 0,8 | 2,6 | — | 200 | 20,0 | — | gelée |
| | 1,35 | | 0,42 | 2,2 | — | 250 | 10,5 | 2,6 | 150 |
| | 3 | | 0,4 | 2,0 | — | 250 | 10,1 | 2,5 | 90 |
| | 4,5 | | 0,3 | 2,0 | — | 250 | 9,9 | 2,5 | 50 |
| D | 0,1 | 2,4 | — | — | — | 200 | — | — | gelée |
| | 1,5 | 2,0 | 2,2 | — | — | | 24,1 | 1,8 | 150 |
| | 3,45 | 2,0 | 2,6 | — | — | 300 | 22,1 | 2,4 | 90 |
| | 4,5 | 0,6 | 2,8 | — | — | 300 | 23,2 | 2,4 | 50 |

Tableau IV

| Produit | Eprouvette de Fe | Eprouvette Cu | Poids de sédiments mg | Augmentation de viscosité en % | Aspect | Lame de cuivre ASTM D 130 |
|---|---|---|---|---|---|---|
| [illegible] | – 0,4 mg | + 0,3 mg | 0 | 10 | limpide | 2 C |
| C | – 0,8 mg | – 23,7 mg | 21 | 50 | trouble | 4 a |
| B | – 1 mg | – 66,7 mg | 10 | 30 | trouble | 4 a |
| E | + 0,4 mg | – 20,3 mg | 31 | 15 | limpide | 4 b |

**Revendications pour les états contractants: BE, CH, DE, GB, IT, NL, SE**

1. Dithiophosphates métalliques caractérisés en ce qu'ils répondent à la formule:

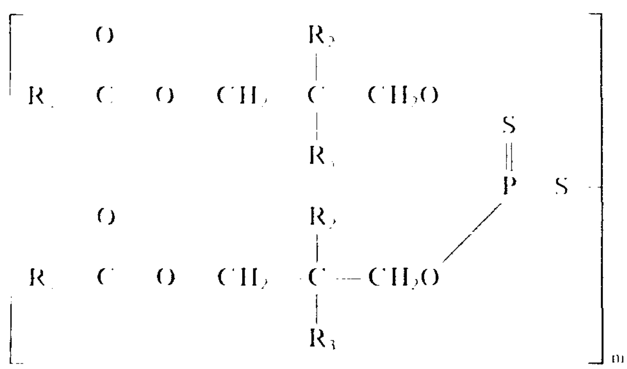

dans laquelle:

– $R_1$ représente:
  – un radical alcoyle linéaire ou ramifié contenant de 1à 24 atomes de carbone, éventuellement substitué par au moins un groupe phényle, halogéno ou hétérocyclique contenant un ou plusieurs hétéroéléments choisis parmi l'azote, le soufre ou l'oxygène,
  – un radical alcényle linéaire ou ramifié contenant de 2 à 24 atomes de carbone, éventuellement substitué par au moins un groupe phényle, halogéno ou hétérocyclique contenant un ou plusieurs hétéroéléments choisis parmi l'azote, le soufre ou l'oxygène,
  – un radical cycloaliphatique ou polycycloaliphatique saturé ou insaturé contenant de 3 à 20 atomes de carbone, éventuellement substitué par un ou plusieurs groupes alcoyles contenant de 1à 12 atomes de carbone ou halogéno,
  – un radical aryle contenant de 6 à 14 atomes de carbone, éventuellement substitué par un ou plusieurs groupes alcoyles contenant de 1 à 12 atomes de carbone, halogéno ou halogénoalcoyle,
  – un radical hétérocyclique contenant 1 ou plusieurs hétéroéléments choisis parmi l'azote, le soufre ou l'oxygène, éventuellement substitué par un ou plusieurs groupes alcoyles contenant de 1 à 12 atomes de carbone ou halogéno.

– $R_2$ et $R_3$ sont semblables ou différents et représentent un radical alcoyle contenant de 1 à 12 atomes de carbone,
– m représente la valence du métal M
– M représente un métal du groupe IIB, IVB ou VIII de la classification périodique des éléments.

2. Dithiophosphates métalliques selon la revendication 1 caractérisés en ce que le métal M est du zinc.

3. Dithiophosphates métalliques selon la revendication 1 ou la revendication 2 caractérisés en ce que $R_1$ contient de 1 à 17 atomes de carbone lorsqu'il représente un radical alcoyle, de 2 à 17 atomes de carbone lorsqu'il représente un radical alcényle et 6 atomes de carbone lorsqu'il représente un radical aryle.

4. Dithiophosphates métalliques selon l'une quelconque des revendications 1 à 3 caractérisés en ce que $R_2$ et $R_3$ contiennent de 1 à 4 atomes de carbone.

5. Dithiophosphates métalliques selon la revendication 4 caractérisés en ce que $R_2$ et $R_3$ représentent

des radicaux méthyle, éthyle ou butyle.

6. Dithiophosphates métalliques selon l'une quelconque des revendications précédentes caractérisés en ce que $R_1$ représente l'un des radicaux: méthyle, dichloro-1,2 éthyle, heptyle, bromo-10 décycle, dibromo-8,9 heptadécycle, heptadécycle, vinyle, phénylvinylène, furyl-2 vinylène, isopropényle, décényle, heptadécényle, cyclopropyle, cyclohexyle, cyclohexényle, en $C_{19}H_{29}$ dérivé de l'acide abiétique, phényle, p-chlorophényle, p-trifluorométhylphényle, diméthyl-2,3 phényle-1, p-octylphényle, furyle-2, méthyl-4 thiazolyle-5, pyridyle-3.

7. Procédé de préparation des dithiophosphates métalliques faisant l'objet de l'une quelconque des revendications 1 à 6 caractérisé en ce que l'on fait réagir du pentasulfure de phosphore sur un monoesteralcool de formule:

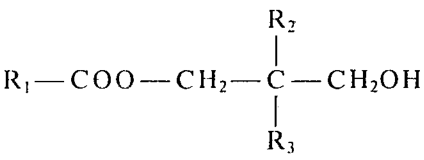

avec une quantité de $P_2S_5$ en excès de 5 à 20% en mole par rapport à la quantité de $P_2S_5$ stoechiométriquement nécessaire pour obtenir un acide dithiophosphorique de formule:

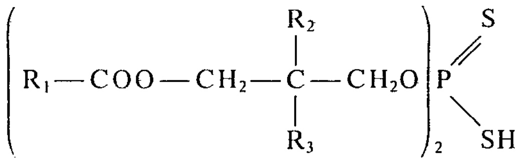

et en ce que l'on fait réagir l'acide dithiophosphorique formé avec une quantité de composé basique de métal M comprise entre la quantité stoechiométriquement nécessaire pour neutraliser ledit acide dithiophosphorique et deux fois cette quantité stoechiométrique.

8. Procédé selon la revendication 7 caractérisé en ce que le composé basique de métal M est de l'oxyde de zinc.

9. Procédé selon la revendication 7 caractérisé en ce que ledit acide dithiophosphorique est préparé à une température comprise entre 50 et 200° C, avec une quantité de $P_2S_5$ correspondant à un excès de 5% mole par rapport à la stoechiométrie, et en ce que l'opération de neutralisation par le composé basique de métal M est réalisée à une température comprise entre 20 et 200° C, avec une quantité de composé basique de métal M comprise entre 1,1 fois et 1,5 fois la quantité stoechiométrique.

10. Procédé selon la revendication 9 caractérisé en ce que l'acide dithiophosphorique est préparé à une température comprise entre 70 et 150° C et en ce que l'opération de neutralisation est réalisée à une température comprise entre 60 et 150° C.

11. Procédé selon l'une quelconque des revendications 7 à 10 caractérisé en ce que les monoesteralcools mis en oeuvre sont ceux dérivés des alcools choisis parmi le néopentylglycol et l'éthyl-2 butyl-n-2 propanediol-1,3 et des acides choisis parmi: l'acide acétique, l'acide dichloro-2,3 propanoique, l'acide octanoique, l'acide bromo-11 undécanoique, l'acide dibromo-9,10 octadécanoique, l'acide stéarique, l'acide acrylique, l'acide cinnamique, l'acide furanacrylique-2, l'acide méthacrylique, l'acide undécylénique, l'acide oléique, l'acide cyclopropane carboxylique, l'acide cyclohexène-1 carboxylique, l'acide cyclohexane carboxylique, l'acide abiétique, l'acide benzoique, l'acide p-chlorobenzoique, l'acide p-trifluorométhylbenzoique, l'acide diméthyl-2,3 benzoique, l'acide p-n-octyl benzoique, l'acide furan-2 carboxylique, l'acide méthyl-4 thiazol carboxylique-5, l'acide nicotinique.

12. Application des dithiophosphates métalliques faisant l'objet de l'une quelconque des revendications 1 à 6, comme additifs extrême-pression et anti-usure pour huiles lubrifiantes.

13. Application selon la revendication 12 caractérisés en ce que lesdits dithiophosphates métalliques sont mis en oeuvre en quantités comprises entre 0,2 et 10% en poids par rapport au poids d'huiles lubrifiantes.

**Revendications pour l'état contractant: AT**

1. Procédé de préparation de dithiophosphates métalliques répondant à la formule·

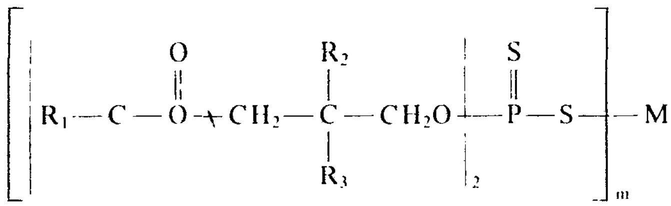

dans laquelle:

— $R_1$ représente:
  — un radical alcoyle linéaire ou ramifié contenant de 1 à 24 atomes de carbone, éventuellement substitué par au moins un groupe phényle, halogéno ou hétérocyclique contenant un ou plusieurs hétéroéléments choisis parmi l'azote, le soufre ou l'oxygène,
  — un radical alcényl linéaire ou ramifié contenant de 2 à 24 atomes de carbone, éventuellement substitué par au moins un groupe phényle, halogéno ou hétérocyclique contenant un ou plusieurs hétéroéléments choisis parmi l'azote, le soufre ou l'oxygène,
  — un radical cycloaliphatique ou polycycloaliphatique saturé ou insaturé contenant de 3 à 20 atomes de carbone, éventuellement substitué par un ou plusieurs groupes alcoyles contenant de 1 à 12 atomes de carbone ou halogéno,
  — un radical aryle contenant de 6 à 14 atomes de carbone, éventuellement substitué par un ou plusieurs groupes alcoyles contenant de 1 à 12 atomes de carbone, halogéno ou halogénoalcoyle,
  — un radical hétérocyclique contenant 1 ou plusieurs hétéroéléments choisis parmi l'azote, le soufre, ou l'oxygène, éventuellement substitué par un ou plusieurs groupes alcoyles contenant de 1 à 12 atomes de carbone ou halogéno,

— $R_2$ et $R_3$ sont semblables ou différents et représentent un radical alcoyle contenant de 1 à 12 atomes de carbone,

— m représente la valence du métal M

— M représente un métal du groupe IIB, IVB ou VIII de la classification périodique, caractérisé en ce que l'on fait réagir du pentasulfure de phosphore sur un monoesteralcool de formule:

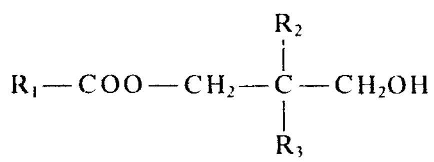

avec une quantité de $P_2S_5$ en excès de 5 à 20% en mole par rapport à la quantité de $P_2S_5$ stoechiométriquement nécessaire pour obtenir un acide dithiophosphorique de formule:

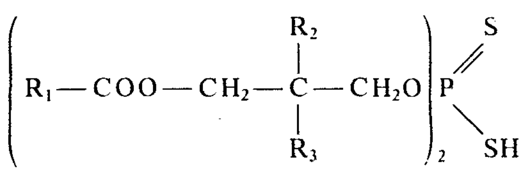

et en ce que l'on fait réagir l'acide dithiophosphorique formé avec une quantité de composé basique de métal M comprise entre la quantité stoechiométriquement nécessaire pour neutraliser ledit acide dithiophosphorique et deux fois cette quantité stoechiométrique.

2. Procédé selon la revendication 1 caractérisé en ce que le composé basique de métal M est de l'oxyde de zinc.

3. Procédé selon la revendication 1 ou la revendication 2 caractérisé en ce que le radical $R_1$ du monoesteralcool contient de 1 à 17 atomes de carbone lorsqu'il représente un radical alcoyle, de 2 à 17 atomes de carbone lorsqu'il représente un radical alcényle, et 6 atomes de carbone lorsqu'il représente un radical aryle.

4. Procédé selon l'une quelconque des revendications 1 à 3, caractérisé en ce que les radicaux $R_2$ et $R_3$ du monoesteralcool contiennent de 1 à 4 atomes de carbone.

5. Procédé selon la revendication 4 caractérisé en ce que lesdits radicaux $R_2$ et $R_3$ représentent des radicaux méthyle, éthyle ou butyle.

6. Procédé selon l'une quelconque des revendications 1 à 5 caractérisé en ce que les monoesteralcools mis en oeuvre sont ceux dérivés des alcools choisis parmi le néopentylglycol et

l'éthyl-2 butyl-n-2 propanediol-1,3 et des acides choisis parmi: l'acide acétique, l'acide dichloro-2,3 propanoique, l'acide octanoique, l'acide bromo-11 undécanoique, l'acide dibromo-9,10 octadécanoique, l'acide stéarique l'acide acrylique, l'acide cinnamique, l'acide furanacrylique-2, l'acide méthacrylique, l'acide undécylénique, l'acide oléique, l'acide cyclopropane carboxylique, l'acide cyclohexène-1 carboxylique, l'acide cyclohexane carboxylique, l'acide abiétique, l'acide benzoique, l'acide p-chlorobenzoique, l'acide p-trifluorométhylbenzoique, l'acide diméthyl-2,3 benzoique, l'acide p-n-octyl benzoique, l'acide furan-2 carboxylique, l'acide méthyl-4 thiazol carboxylique-5, l'acide nicotinique.

7. Procédé selon l'une quelconque des revendications 1 à 6, caractérisé en ce que ledit acide dithiophosphorique est préparé à une température comprise entre 50 et 200°C avec une quantité de $P_2S_5$ correspondant à un excès de 5% en mole par rapport à la stoechiométrie, et en ce que l'opération de neutralisation par le composé basique de métal M est réalisée à une température comprise entre 20 et 200°C avec une quantité de composé basique de métal M comprise entre 1,1 fois et 1,5 fois la quantité stoechiométrique.

8. Procédé selon la revendication 7 caractérisé en ce que l'acide dithiophosphorique est préparé à une température comprise entre 70 et 150°C et en ce que l'opération de neutralisation est réalisée à une température comprise entre 60 et 150°C.

9. Application des dithiophosphates métalliques obtenus selon l'une quelconque des revendications 1 à 8, comme additifs extrême-pression et anti-usure pour huiles lubrifiantes.

10. Application selon la revendication 9, caractérisée en ce que lesdits dithiophosphates métalliques sont mis en oeuvre en quantités comprises entre 0,2 et 10% en poids par rapport au poids d'huiles lubrifiantes.

**Patentansprüche für die Vertragsstaaten: BE, CH, DE, GB, IT, NL, SE**

1. Metalldithiophosphate der allgemeinen Formel

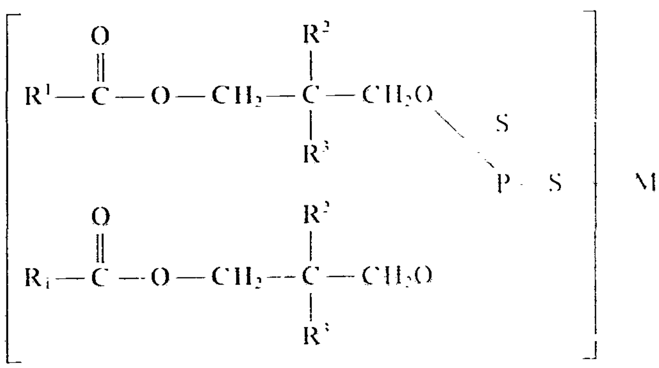

in der

— $R^1$ bedeutet:
  — eine lineare oder verzweigte Alkylgruppe, enthaltend 1 bis 24 Kohlenstoffatome, die gegebenenfalls substituiert ist durch mindestens eine Phenylgruppe, ein Halogenatom oder eine heterocyclische Grupppe enthaltend ein oder mehrere Heteroelemente ausgewählt unter Stickstoff, Schwefel oder Sauerstoff,
  — eine lineare oder verzweigte Alkenylgruppe, enthaltend 2 bis 24 Kohlenstoffatome, gegebenenfalls substituiert mit mindestens einer Phenylgruppe, einem Halogenatom oder einer heterocyclischen Gruppe enthaltend ein oder mehrere Heteroelemente ausgewählt unter Stickstoff, Schwefel oder Sauerstoff,
  — eine gesättigte oder ungesättigte cycloaliphatische oder polycycloaliphatische Gruppe enthaltend 3 bis 20 Kohlenstoffatome, gegebenenfalls substituiert mit ein oder mehreren Alkylgruppen, die 1 bis 12 Kohlenstoffatome enthalten, oder mit Halogen,
  — eine Arylgruppe enthaltend 6 bis 14 Kohlenstoffatome, gegebenenfalls substituiert mit einer oder mehreren Alkylgruppen enthaltend 1 bis 12 Kohlenstoffatome, Halogenatom(en) oder Halogenalkylgruppe(n),
  — eine heterocyclische Gruppe enthaltend ein oder mehrere Heteroelemente ausgewählt unter Stickstoff, Schwefel und Sauerstoff, gegebenenfalls substituiert mit ein oder mehreren Alkylgruppen enthaltend 1 bis 12 Kohlenstoffatome oder Halogen,
— $R^2$ und $R^3$ gleich oder verschieden sind und jeweils für eine Alkylgruppe enthaltend 1 bis 12 Kohlenstoffatome stehen,
— m die Wertigkeit des Metalls M angibt, und
— M ein Metall(Atom) aus der Gruppe IIB, IVB oder VIII des Periodensystems ist.

2. Metalldithiophosphate nach Anspruch 1, dadurch gekennzeichnet, daß das Metall M Zink ist.

3. Metalldithiophosphate nach Anspruch 1 oder Anspruch 2, dadurch gekennzeichnet, daß $R^1$ 1 bis 17 Kohlenstoffatome enthält, wenn es sich um eine Alkylgruppe handelt, 2 bis 17 Kohlenstoffatome, wenn es sich um eine Alkenylgruppe handelt und 6 Kohlenstoffatome, wenn es sich um eine Arylgruppe handelt.

4. Metalldithiophosphate nach einem der Ansprüche 1 bis 3, dadurch gekennzeichnet, daß $R^2$ und $R^3$ 1 bis 4 Kohlenstoffatome enthalten.

5. Metalldithiophosphate nach Anspruch 4, dadurch gekennzeichnet, daß die Gruppen $R^2$ und $R^3$ für Methyl-, Äthyl- oder Butylgruppen stehen.

6. Metalldithiophosphate nach irgendeinem der vorangegangenen Ansprüche, dadurch gekennzeichnet, daß $R^1$ für eine der folgenden Gruppen steht: Methyl, 1,2-Dichloräthyl, Heptyl, 10-Bromdecyl, 8,9-Dibromheptadecyl, Heptadecyl, Vinyl, Phenylvinylen, 2-Furylvinylen, Isopropenyl, Decenyl, Heptadecenyl, Cyclopropyl, Cyclohexyl, Cyclohexenyl, $C_{19}H_{29}$-Derivat der Abietinsäure, Phenyl, p-Chlorphenyl, p-Trifluormethylphenyl, 2,3-Dimethyl-1-phenyl, p-Octylphenyl, 2-Furyl, 4-Methyl-5-thiazolyl, 3-Pyridyl.

7. Verfahren zur Herstellung der Metalldithiophosphate nach irgendeinem der Ansprüche 1 bis 6, dadurch gekennzeichnet, daß man Phosphorpentasulfid auf einen Monoesteralkohol der Formel

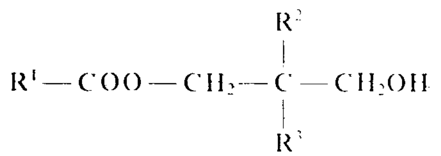

einwirken läßt mit einem $P_2S_5$-Überschuß von 5 bis 20 mol-%, bezogen auf dem Menge $P_2S_5$, die stöchiometrisch notwendig ist, um eine Dithiophosphorsäure der Formel

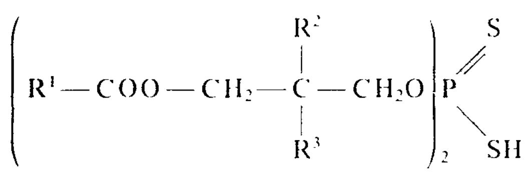

zu erhalten und daß man die entstandene Dithiophosphorsäure mit einer Menge basischer Verbindung des Metalls M umsetzt, die im Bereich zwischen der stöchiometrischen Menge, die erforderlich ist, um die Dithiophosphorsäure zu neutralisieren und dem zweifachen dieser stöchiometrischen Menge liegt.

8. Verfahren nach Anspruch 7, dadurch gekennzeichnet, daß die basische Verbindung des Metalls M Zinkoxid ist.

9. Verfahren nach Anspruch 7, dadurch gekennzeichnet, daß die Dithiophosphorsäure hergestellt wird bei einer Temperatur von 50 bis 200° C mit einer Menge $P_2S_5$, die einem Überschuß von 5 mol-%, bezogen auf die Stöchiometrie entspricht und das die Neutralisation mit der basischen Verbindung des Metalls M bei einer Temperatur von 20 bis 200° C mit einer Menge basischer Verbindung des Metalls M im Bereich des 1,1- bis 1,5-fachen der stöchiometrischen Menge ausgeführt wird.

10. Verfahren nach Anspruch 9, dadurch gekennzeichnet, daß die Dithiophosphorsäure bei einer Temperatur von 70 bis 150° C hergestellt wird und daß die Neutralisation bei einer Temperatur von 60 bis 150° C durchgeführt wird.

11. Verfahren nach irgendeinem der Ansprüche 7 bis 10, dadurch gekennzeichnet, daß die eingesetzten Monoesteralkohole sich ableiten von Alkoholen aus der Gruppe Neopentylglykol und 2-Äthyl-2-n-butyl-propandiol-1,3 und von Säuren ausgewählt aus der Gruppe: Esssigsäure, 2,3-Dichlorpropansäure, Octansäure, 11-Bromundecansäure, 9,10-Dibromoctadecansäure, Stearinsäure, Acrylsäure, Zimtsäure, Furan-2-acrylsäure, Methacrylsäure, Undecylensäure, Oleinsäure, Cyclopropancarbonsäure, Cyclohexen-1-carbonsäure, Cyclohexancarbonsäure, Abietinsäure, Benzoesäure, p-Chlorbenzoesäure, p-Trifluormethyl-benzoesäure, 2,3-Dimethylbenzoesäure, p-n-Octylbenzoesäure, Furan-2-carbonsäure, 4-Methylthiazol-5-carbonsäure und Nikotinsäure.

12. Anwendung der Metalldithiophosphate nach irgendeinem der Ansprüche 1 bis 6 als Höchstdruck- und Antiverschleißzusätze für Schmieröle.

13. Anwendung nach Anspruch 12, dadurch gekennzeichnet, daß die Metalldithiophosphate in einer Menge von 0,2 bis 10 Gew.-%, bezogen auf die Schmieröle, eingesetzt werden.

**Patentansprüche für den Vertragsstaat: AT**

1. Verfahren zur Herstellung von Metalldithiophosphaten der allgemeinen Formel

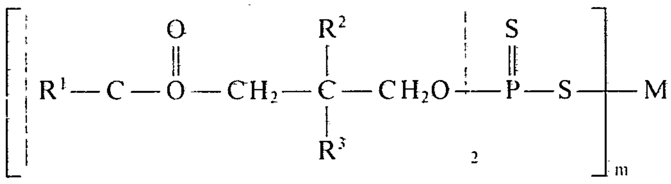

in der

— $R^1$ bedeutet:
  — eine lineare oder verzweigte Alkylgruppe, enthaltend 1 bis 24 Kohlenstoffatome, die gegebenenfalls substituiert ist durch mindestens eine Phenylgruppe, ein Halogenatom oder ein heterocyclische Gruppe enthaltend ein oder mehrere Heteroelemente ausgewählt unter Stickstoff, Schwefel oder Sauerstoff,
  — eine lineare oder verzweigte Alkenylgruppe, enthaltend 2 bis 24 Kohlenstoffatome, gegebenenfalls substituiert mit mindestens einer Phenylgruppe, einem Halogenatom oder einer heterocyclischen Gruppe enthaltend ein oder mehrere Heteroelemente ausgewählt unter Stickstoff, Schwefel oder Sauerstoff,
  — eine gesättigte oder ungesättigte cycloaliphatische oder polycycloaliphatische Gruppe enthaltend 3 bis 20 Kohlenstoffatome, gegebenenfalls substituiert mit ein oder mehreren Alkylgruppen, die 1 bis 12 Kohlenstoffatome enthalten oder mit Halogen,
  — eine Arylgruppe enthaltend 6 bis 14 Kohlenstoffatome, gegebenenfalls substituiert mit ein oder mehreren Alkylgruppen enthaltend 1 bis 12 Kohlenstoffatome, Halogen oder Halogenalkyl(gruppe),
  — eine heterocyclische Gruppe enthaltend ein oder mehrere Heteroelemente ausgewählt unter Stickstoff, Schwefel und Sauerstoff, gegebenenfalls substituiert mit ein oder mehreren Alkylgruppen enthaltend 1 bis 12 Kohlenstoffatome oder Halogen,
— $R^2$ und $R^3$ gleich oder verschieden sind und jeweils für eine Alkylgruppe enthaltend 1 bis 12 Kohlenstoffatome stehen,
— m die Wertigkeit des Metalls M angibt,
— M ein Metall(Atom) aus der Gruppe IIB, IVB oder VIII des Periodensystems ist, dadurch gekennzeichnet, daß man Phosphorpentasulfid auf einen Monoesteralkohol der Formel

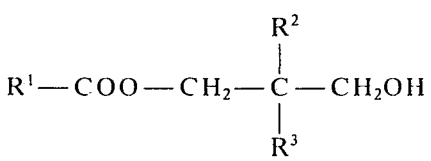

einwirken läßt mit einem $P_2S_5$-Überschuß von 5 bis 20 mol-%, bezogen auf die Menge $P_2S_5$, die stöchiometrisch notwendig ist, um eine Dithiophosphorsäure der Formel

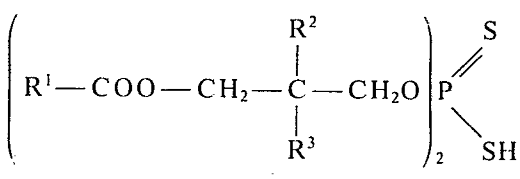

zu erhalten und daß man die entstandene Dithiophosphorsäure mit einer Menge basischer Verbindung des Metalls M umsetzt, die im Bereich zwischen der stöchiometrischen Menge, die erforderlich ist, um die Dithiophosphorsäure zu neutralisieren und dem zweifachen dieser stöchiometrischen Menge liegt.

2. Verfahren nach Anspruch 1, dadurch gekennzeichnet, daß die basische Verbindung des Metalls M Zinkoxid ist.
3. Verfahren nach Anspruch 1 oder Anspruch 2, dadurch gekennzeichnet, daß die Gruppe $R^1$ des Monoesteralkohols 1 bis 17 Kohlenstoffatome enthält, wenn es sich um eine Alkylgruppe handelt, 2 bis 17 Kohlenstoffatome, wenn es sich um eine Alkylengruppe handelt und 6 Kohlenstoffatome, wenn es sich um ein Arylgruppe handelt.
4. Verfahren nach einem der Ansprüche 1 bis 3, dadurch gekennzeichnet, daß die Gruppen $R^2$ und $R^3$ des Monoesteralkohols 1 bis 4 Kohlenstoffatome enthalten.

5. Verfahren nach Anspruch 4, dadurch gekennzeichnet, daß die Gruppen $R^2$ und $R^3$ für Methyl-, Äthyl- oder Butylgruppen stehen.

6. Verfahren nach irgendeinem der Ansprüche 1 bis 5, dadurch gekennzeichnet, daß die eingesetzten Monoesteralkohole sich ableiten von Alkoholen aus der Gruppe Neopentylglykol und 2-Äthyl-2-n-butyl-propandiol-1,3 und von Säuren ausgewählt aus der Gruppe: Essigsäure, 2,3-Dichlorpropansäure, Octansäure, 11-Bromundecansäure, 9,10-Dibromoctadecansäure, Stearinsäure, Acrylsäure, Zimtsäure, Furan-2-acrylsäure, Methacrylsäure, Undecylensäure, Oleinsäure, Cyclopropancarbonsäure, Cyclohexen-1-carbonsäure, Cyclohexancarbonsäure, Abietinsäure, Benzoesäure, p-Chlorbenzoesäure, p-Trifluormethyl-benzoesäure, 2,3-Dimethylbenzoesäure, p-n-Octylbenzoesäure, Furan-2-carbonsäure, 4-Methylthiazol-5-carbonsäure und Nikotinsäure.

7. Verfahren nach irgendeinem der Ansprüche 1 bis 6, dadurch gekennzeichnet, daß die Dithiophosphorsäure hergestellt wird bei einer Temperatur von 50 bis 200° C mit einer Menge $P_2S_5$, die einem Überschuß von 5 mol-%, bezogen auf die Stöchiometrie entspricht und das die Neutralisation mit der basischen Verbindung des Metalls M bei einer Temperatur von 20 bis 200° C mit einer Menge basischer Verbindung des Metalls M im Bereich des 1,1- bis 1,5-fachen der stöchiometrischen Menge ausgeführt wird.

8. Verfahren nach Anspruch 7, dadurch gekennzeichnet, daß die Dithiophosphorsäure bei einer Temperatur von 70 bis 150° C hergestellt wird und daß die Neutralisation bei einer Temperatur von 60 bis 150° C durchgeführt wird.

9. Anwendung der nach irgendeinem der Ansprüche 1 bis 8 erhaltenen Metalldithiophosphate als Höchstdruck- und Antiverschleißzusätze für Schmieröle.

10. Anwendung nach Anspruch 9, dadurch gekennzeichnet, daß die Metalldithiophosphate in einer Menge von 0,2 bis 10 Gew.-%, bezogen auf die Schmieröle, eingesetzt werden.

**Claims for the Contracting States: BE, CH, DE, GB, IT, NL, SE**

1. Metal dithiophosphates, characterised in that they correspond to the formula:

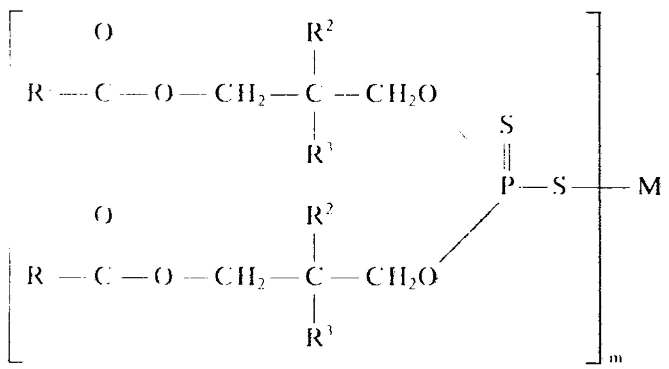

in which $R_1$ represents:

a linear or branched alkyl radical containing from 1 to 24 carbon atoms, which is optionally substituted by at least one phenyl group, halogeno group or heterocyclic group containing one or more hetero-elements chosen from amongst nitrogen, sulphur or oxygen,

a linear or branched alkenyl radical containing from 2 to 24 carbon atoms, which is optionally substituted by at least one phenyl group, halogeno group or heterocyclic group containing one or more hetero-elements chosen from amongst nitrogen, sulphur or oxygen,

a saturated or unsaturated, cycloaliphatic or polycycloaliphatic radical containing from 3 to 20 carbon atoms, which is optionally substituted by one or more alkyl groups containing from 1 to 12 carbon atoms, or halogeno groups,

an aryl radical containing from 6 to 14 carbon atoms, which is optionally substituted by one or more alkyl groups containing from 1 to 12 carbon atoms, halogeno groups or halogenoalkyl groups, or

a heterocyclic radical containing one or more hetero-elements chosen from amongst nitrogen, sulphur or oxygen, which is optionally substituted by one or more alkyl groups containing from 1 to 12 carbon atoms, or halogeno groups,

$R_2$ and $R_3$ are similar or different and represent an alkyl radical containing from 1 to 12 carbon atoms, m represents the valency of the metal M, and M represents a metal from group IIB, IVB or VIII of the periodic classification of the elements.

2. Metal dithiophosphates according to Claim 1, characterised in that the metal M is zinc.

3. Metal dithiophosphates according to Claim 1 or Claim 2, characterised in that $R_1$ contains from 1 to

17 carbon atoms if it represents an alkenyl radical and 6 carbon atoms if it represents an aryl radical.

4. Metal dithiophosphates according to any one of Claims 1 to 3, characterised in that $R_2$ and $R_3$ contain from 1 to 4 carbon atoms.

5. Metal dithiophosphates according to Claim 4, characterised in that $R_2$ and $R_3$ represent methyl, ethyl or butyl radicals.

6. Metal dithiophosphates according to any one af the preceding claims, characterised in that $R_1$ represents one of the following radicals: methyl, 1,2-dichloroethyl, heptyl, 10-bromodecyl, 8,9-dibromoheptadecyl, heptadecyl, vinyl, phenylvinylene, furan-2-yl-vinylene, isopropenyl, decenyl, heptadecenyl, cyclopropyl, cyclohexyl, cyclohexenyl, the $C_{19}H_{29}$ radical derived from abietic acid, phenyl, p-chlorophenyl, p-trifluoromethylphenyl, 2,3-dimethylphenyl, p-octylphenyl, furan-2-yl, 4-methylthiazol-5-yl and pyrid-3-yl.

7. Process for the preparation of the metal dithiophosphates forming the subject of any one of Claims 1 to 6, characterised in that phosphorus pentasulphide is reacted with a monoester-alcohol of the formula:

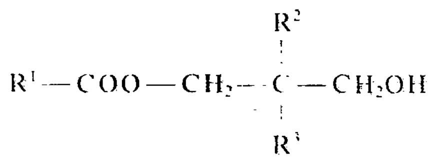

with a 5 to 20 mol-% excess of $P_2S_5$, relative to the amount of $P_2S_5$ stoichiometrically required to obtain a dithiophosphoric acid of the formula:

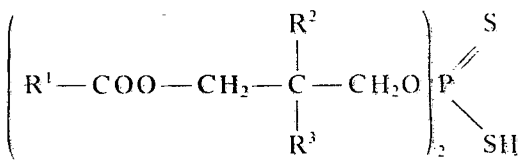

and in that the dithiophosphoric acid formed is reacted with an amount of a basic compound of the metal M which is between the amount stoichiometrically required to neutralise the said dithiophosphoric acid and twice this stoichiometric amount.

8. Process according to Claim 7, characterised in that the basic compound of the metal M is zinc oxide.

9. Process according to Claim 7, characterised in that the said dithiophosphoric acid is prepared at a temperature between 50 and 200° C. with an amount of $P_2S_5$ corresponding to a 5 mol% excess relative to stoichiometry, and in that the neutralisation operation with the basic compound of the metal M is carried out at a temperature between 20 and 200° C, with an amount of the basic compound of the metal M which is between 1.1 times and 1.5 times the stoichiometric amount.

10. Process according to Claim 9, characterised in that the dithiophosphoric acid is prepared at a temperature between 70 and 150° C and in that the neutralisation operation is carried out at a temperature between 60 and 150° C.

11. Process according to any one of Claims 7 to 10, characterised in that the monoester-alcohols used are those derived from alcohols chosen from amongst neopentylglycol and 2-ethyl-2-n-butylpropane-1,3-diol, and from acids chosen from amongst acetic acid, 2,3-dichloropropanoic acid, octanoic acid, 11-bromoundecanoic acid, 9,10-dibromooctadecanoic acid, stearic acid, acrylic acid, cinnamic acid, furan-2-acrylic acid, methacrylic acid, undecylenic acid, oleic acid, cyclopropanecarboxylic acid, cyclohexene-1-carboxylic acid, cyclohexanecarboxylic acid, abietic acid, benzoic acid, p-chlorobenzoic acid, p-trifluoromethylbenzoic acid, 2,3-dimethylbenzoic acid, p-n-octylbenzoic acid, furan-2-carboxylic acid, 4-methyl-thiazole-5-carboxylic acid and nicotinic acid.

12. Application of the metal dithiophosphates forming the subject of any one of Claims 1 to 6 as extreme-pressure and anti-wear additives for lubricating oils.

13. Application according to Claim 12, characterised in that the said metal dithiophosphates are used in amounts of between 0.2 and 10% by weight, relative to the weight of lubricating oils.

**Claims for the Contracting State: AT**

1. Process for the preparation of metal dithiophosphates corresponding to the formula:

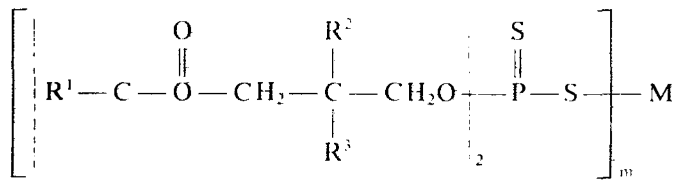

in which $R_1$ represents:

a linear or branched alkyl radical containing from 1 to 24 carbon atoms, which is optionally substituted by at least one phenyl group, halogeno group or heterocyclic group containing one or more hetero-elements chosen from amongst nitrogen, sulphur or oxygen,
a linear or branched alkenyl radical containing from 2 to 24 carbon atoms, which is optionally substituted by at least one phenyl group, halogeno group or heterocyclic group containing one or more hetero-elements chosen from amongst nitrogen, sulphur or oxygen,
a saturated or unsaturated, cycloaliphatic or polycycloaliphatic radical containing from 3 to 20 carbon atoms, which is optionally substituted by one or more alkyl groups containing from 1 to 12 carbon atoms, or halogeno groups,
an aryl radical containing from 6 to 14 carbon atoms, which is optionally substituted by one or more alkyl groups containing from 1 to 12 carbon atoms, halogeno groups or halogenalkyl groups, or
a heterocyclic radical containing one or more hetero-elements chosen from amongst nitrogen, sulphur or oxygen, which is optionally substituted by one or more alkyl groups containing from 1 to 12 carbon atoms, or halogeno groups,

$R_2$ and $R_3$ are similar or different and represent an alkyl radical containing from 1 to 12 carbon atoms, m represents the valency of the metal M, and M represents a metal from group IIB, IVB or VIII of the periodic classification, characterised in that phosphorus pentasulphide is reacted with a monoester-alcohol of the formula:

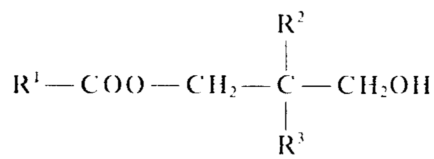

with a 5 to 20 mol% excess of $P_2S_5$, relative to the amount of $P_2S_5$ stoichiometrically required to obtain a dithiophosphoric acid of the formula:

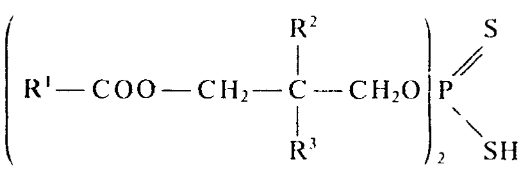

and in that the dithiophosphoric acid formed is reacted with an amount of a basic compound of the metal **M** which is between the amount stoichiometrically required to neutralise the said dithiophosphoric acid and twice this stoichiometric amount.

2. Process according to Claim 1, characterised in that the basic compound of the metal M is zinc oxide.

3. Process according to Claim 1 or Claim 2, characterised in that the radical $R_1$ of the monoester-alcohol contains from 1 to 17 carbon atoms if it represents an alkyl radical, from 2 to 17 carbon atoms if it represents an alkenyl radical and 6 carbon atoms if it represents an aryl radical.

4. Process according to any one of Claims 1 to 3, characterised in that the radicals $R_2$ and $R_3$ of the monoester-alcohol contain from 1 to 4 carbon atoms.

5. Process according to Claim 4, characterised in that the said radicals $R_2$ and $R_3$ represent methyl, ethyl or butyl radicals.

6. Process according to any one of Claims 1 to 5, characterised in that the monoester-alcohols used are those derived from alcohols chosen from amongst neopentylglycol and 2-ethyl-2-n-butylpropane-1,3-diol, and from acids chosen from amongst acetic acid, 2,3-dichloropropanoic acid, octanoic acid, 11-bromoundecanoic acid, 9,10-dibromooctadecanoic acid, stearic acid, acrylic acid, cinnamic acid,

furan-2-acrylic acid, methacrylic acid, undecylenic acid, oleic acid, cyclopropanecarboxylic acid, cyclohexene-1-carboxylic acid, cyclohexanecarboxylic acid, abietic acid, benzoic acid, p-chlorobenzoic acid, p-trifluormethylbenzoic acid, 2,3-dimethylbenzoic acid, p-n-octylbenzoic acid, furan-2-carboxylic acid, 4-methyl-thiazole-5-carboxylic acid and nicotinic acid.

7. Process according to any one of Claims 1 to 5, characterised in that the said dithiophosphoric acid is prepared at a temperature between 50 and 200° C, with an amount of $P_2S_5$ corresponding to a 5 mol% excess relative to stoichiometry, and in that the neutralisation operation with the basic compound of the metal M is carried out at a temperature between 20 and 200° C, with an amount of the basic compound of the metal M which is between 1.1 times and 1.5 times the stoichiometric amount.

8. Process according to Claim 7, characterised in that the dithiophosphoric acid is prepared at a temperature between 70 and 150° C and in that the neutralisation operation is carried out at a temperature between 60 and 150° C.

9. Application of the metal dithiophosphates obtained according to any one of Claims 1 to 8 as extreme-pressure and anti-wear additives for lubricating oils.

10. Application according to Claim 9, characterised in that the said metal dithiophosphates are used in amounts of between 0.2 and 10% by weight, relative to the weight of lubricating oils.